# EUROPÄISCHE PATENTSCHRIFT

(11) **EP 2 964 498 B1**
(45) Veröffentlichungstag und Bekanntmachung des Hinweises auf die Patenterteilung: **10.05.2017**
(21) Anmeldenummer: 14701487.2
(22) Anmeldetag: 10.01.2014
(51) Int. Cl.: B60T 13/66, B60T 8/17

(54) **STEUERVORRICHTUNG FÜR EIN BREMSSYSTEM EINES FAHRZEUGS UND VERFAHREN ZUM BETREIBEN EINES BREMSSYSTEMS EINES FAHRZEUGS**
CONTROL DEVICE FOR A VEHICLE BRAKING SYSTEM, AND A METHOD FOR OPERATING A VEHICLE BRAKING SYSTEM
DISPOSITIF DE COMMANDE POUR SYSTÈME DE FREINAGE D'UN VÉHICULE ET PROCÉDÉ PERMETTANT DE FAIRE FONCTIONNER UN SYSTÈME DE FREINAGE D'UN VÉHICULE

(30) Priorität: 06.03.2013 DE 102013203824
(43) Veröffentlichungstag der Anmeldung: 13.01.2016
(73) Patentinhaber: Robert Bosch GmbH, 70442 Stuttgart (DE)
(72) Erfinder: BUNK, Michael, 74211 Leingarten (DE); REICHERT, Michael, 71691 Freiberg Am Neckar (DE); BETZ, Christoph, 71696 Moeglingen (DE)
(86) Internationale Anmeldenummer: PCT/EP2014/050383
(87) Internationale Veröffentlichungsnummer: WO 2014/135290

(56) Entgegenhaltungen:
- WO-A1-92/18361
- DE-A1-102011 075 983

## Beschreibung

Die Erfindung betrifft eine Steuervorrichtung für ein Bremssystem eines Fahrzeugs. Ebenso betrifft die Erfindung ein Bremssystem für ein Fahrzeug. Des Weiteren betrifft die Erfindung ein Verfahren zum Betreiben eines Bremssystems eines Fahrzeugs.

### Stand der Technik

In der DE 10 2011 075 983 A1 sind ein hydraulisches Bremssystem, eine Steuervorrichtung und ein Verfahren zu dessen Betrieb beschrieben. Mittels einer Nutzung des hydraulischen Bremssystems soll es möglich sein, ein Fahrzeug mittels mindestens eines Elektromotors und eines hydraulischen Bremssystems abzubremsen.

### Offenbarung der Erfindung

Die Erfindung schafft eine Steuervorrichtung für ein Bremssystem eines Fahrzeugs mit den Merkmalen des Anspruchs 1, ein Bremssystem für ein Fahrzeug mit den Merkmalen des Anspruchs 8 und ein Verfahren zum Betreiben eines Bremssystems eines Fahrzeugs mit den Merkmalen des Anspruchs 9.

### Vorteile der Erfindung

Die vorliegende Erfindung ermöglicht die Nutzung/Auswahl einer optimierten Ansteuerungsstrategie zum Betreiben des Bremssystems. Aus mindestens zwei Betriebsmoden kann gezielt der Betriebsmodus gewählt werden, welcher bezüglich eines Fahrkomforts und/oder einer Energieeffizienz am Vorteilhaftesten ist. Beispiele für konkrete Ansteuerstrategien, aus welchen der ausgewählte Betriebsmodus gewählt werden kann, werden unten noch genauer erläutert. Die vorliegende Erfindung gewährleistet somit ein komfortables und energieeffizientes Abbremsen eines Fahrzeugs.

Wie nachfolgend noch genauer ausgeführt wird, können verschiedene Ansteuerstrategien zur Auswahl gestellt werden, wobei auch gezielt zwischen den verschiedenen Ansteuerstrategien/Betriebsmoden hin- und hergeschaltet werden kann. Auf diese Weise ist auch eine maximal mögliche Rekuperation durch ein achsweises Verblenden bei einem optimalen Komfort, insbesondere aufgrund einer Geräuschunterdrückung, realisierbar.

In einem Bremssystem gibt es in der Regel mehrere Möglichkeiten zum Ausführen eines Druckaufbaus, eines Druckhaltens oder eines Druckabbaus in mindestens einem der Bremskreise. Beispielsweise verfügt ein Bremssystem häufig über eine Hauptbremszylinder-Druckvariiereinrichtung, mittels welcher ein Hauptbremszylinderinnendruck unabhängig von einer auf ein Bremsbetätigungselement ausgeübten Fahrerbremskraft oder unter Berücksichtigung der Fahrerbremskraft variierbar ist. Eine derartige Hauptbremszylinder-Druckvariiereinrichtung kann beispielsweise mindestens einen Plunger und/oder einen Bremskraftverstärker umfassen. Insbesondere mittels eines elektromechanischen Bremskraftverstärkers kann eine Unterstützungskraft unter Berücksichtigung der aktuellen Fahrerbremskraft oder unabhängig von der Fahrerbremskraft so auf mindestens einen verstellbaren Kolben des Hauptbremszylinders ausgeübt werden, dass der Hauptbremszylinder-Innendruck zusätzlich gesteigert oder reduziert wird. Außerdem verfügt ein Bremssystem in der Regel über Radeinlassventile und Radauslassventile, mittels welchen ein Bremsflüssigkeitstransfer zwischen dem Hauptbremszylinder und den Radbremszylindern des Bremssystems steuerbar ist. Des Weiteren weist ein Bremssystem oft mindestens ein Umschaltventil, mindestens ein Hochdruckschaltventil und/oder mindestens eine Pumpe auf, mittels welchen sich ebenfalls ein Variieren des in dem mindestens einen Radbremszylinder vorliegenden Bremsdrucks ausführen lässt.

Mittels der vorliegenden Erfindung kann der Nachteil behoben werden, dass hydraulische Komponenten häufig störende/unerwünschte Geräusche bewirken. Stattdessen gewährleistet die vorliegende Erfindung eine gezielte geräuschoptimierte Auswahlmöglichkeit des genutzten Betriebsmodus, wobei gleichzeitig eine gute Rekuperationseffizienz, eine hohe Dynamik und eine verlässliche Druckstellgenauigkeit gewährleistet sind.

Die vorliegende Erfindung nutzt den Vorteil, dass bei einer Umsetzung einer Verblendung von Bremsmomenten mehrere Freiheitsgrade bezüglich einer möglichen Nutzung der hydraulischen Komponenten des Bremssystems vorliegen. Somit können der in dem mindestens einen ersten Radbremszylinder des ersten Bremskreises vorliegende erste Bremsdruck und der in dem mindestens einen zweiten Radbremszylinder des zweiten Bremskreises vorliegende zweite Bremskreis auf ganz unterschiedliche Art umgesetzt werden. Mittels der Auswahl des optimierten Betriebsmodus können die Nachteile der nicht-ausgewählten Betriebsmoden umgangen werden.

In einer vorteilhaften Ausführungsform der Steuervorrichtung ist die Elektronikeinrichtung dazu ausgelegt, einen Fahrzeugtyp des Fahrzeugs, eine Fahrsituation, eine Verkehrssituation und/oder eine Umgebungsbedingung als die mindestens eine bereitgestellte Vorgabegröße zu berücksichtigen. Beispielsweise kann speziell der im Hinblick auf den Fahrzeugtyp optimierte Betriebsmodus ausgewählt werden, bei welchem aufgrund der Anordnung/Auslegung der hydraulischen Komponenten des Bremssystems gewährleistet ist, dass mindestens eine Geräusche bewirkende hydraulische Komponente vergleichsweise selten/nie und/oder nur in einem geräuschoptimierten leistungsreduzierten Betrieb eingesetzt wird.

Vorzugsweise ist die Elektronikeinrichtung dazu ausgelegt, mindestens einen Plunger, mindestens eine Pumpe, mindestens ein Radeinlassventil, mindestens ein Radauslassventil, mindestens ein Hochdruckschaltventil und/oder mindestens ein Umschaltventil als die erste Komponente und/oder die zweite Komponente anzusteuern. Als Ergänzung kann auch ein Bremskraftverstärker, wie insbesondere ein elektromechanischer Bremskraftverstärker, mittels der Elektronikeinrichtung ansteuerbar sein. Die Steuervorrichtung kann somit bereits an einem Bremssystem eingesetzte Komponenten nutzen. Somit entfällt die Notwendigkeit, zusätzliche Geräte/Einrichtungen an einem mit der Steuervorrichtung zusammenwirkenden Bremssystem bereitzustellen.

In einer weiteren vorteilhaften Ausführungsform ist die Elektronikeinrichtung dazu ausgelegt, das Bremssystem in einen Radauslassventilnutzenden-Betriebsmodus ausgewählt aus den mindestens zwei ausführbaren Betriebsmoden so zu betreiben, dass ein Hauptbremszylinder-Innendruck in einem Hauptbremszylinder des Bremssystems gleich einem Maximum des ersten Bremsdrucks und des zweiten Bremsdrucks mittels des mindestens einen angesteuerten Plungers einstellbar ist, und der erste Bremsdruck oder der zweite Bremsdruck gegenüber dem Hauptbremszylinder-Innendruck zumindest mittels des mindestens einen angesteuerten Radauslassventils reduzierbar ist. Auf diese Weise kann bei einer geräuschoptimierten Verbauung/Auslegung der Radauslassventile gezielt dieser geräuschoptimierte Radauslassventilnutzende-Betriebsmodus zum Gewährleisten der gewünschten Bremsdrücke genutzt werden.

Als Alternative oder als Ergänzung dazu kann die Elektronikeinrichtung dazu ausgelegt sein, das Bremssystem in einem Pumpennutzenden-Betriebsmodus ausgewählt aus den mindestens zwei ausführbaren Betriebsmoden so zu betreiben, dass der Hauptbremszylinder-Innendruck gleich einem Minimum des ersten Bremsdrucks und des zweiten Bremsdrucks mittels des mindestens einen angesteuerten Plungers einstellbar ist, und der erste Bremsdruck oder der zweite Bremsdruck gegenüber dem Hauptbremszylinder-Innendruck zumindest mittels der mindestens einen angesteuerten Pumpe steigerbar ist. Dieser Modus eignet sich besonders bei einer geräuschoptimierten Anordnung/Auslegung der mindestens einen Pumpe hervorragend zum Einstellen der gewünschten Bremsdrücke.

Ebenso kann die Elektronikeinrichtung dazu ausgelegt sein, das Bremssystem in einen Plungernutzenden-Betriebsmodus ausgewählt aus den mindestens zwei ausführbaren Betriebsmoden so zu betreiben, dass der erste Bremsdruck und der zweite Bremsdruck gleichzeitig steigerbar sind, indem der Hauptbremszylinder-Innendruck gleich dem Maximum des ersten Bremsdrucks und des zweiten Bremsdrucks mittels des mindestens einen angesteuerten Plungers einstellbar ist, und der erste Bremsdruck und der zweite Bremsdruck gleichzeitig reduzierbar sind, indem der Hauptbremszylinder-Innendruck gleich dem Minimum des ersten Bremsdrucks und des zweiten Bremsdrucks mittels des mindestens einen angesteuerten Plungers einstellbar ist. Wie unten genauer ausgeführt wird, kann mittels eines derartigen Plungernutzenden-Betriebsmodus gezielt auf einen Einsatz einer Pumpe oder eines Radauslassventils verzichtet werden.

Des Weiteren kann die Elektronikeinrichtung in einer vorteilhaften Ausführungsform dazu ausgelegt sein, das Bremssystem in einen Plungereinsetzenden-Betriebsmodus ausgewählt aus den mindestens zwei ausführbaren Betriebsmoden so zu betreiben, dass der erste Bremsdruck und der zweite Bremsdruck gleichzeitig steigerbar sind, indem der Hauptbremszylinder-Innendruck größer dem Maximum des ersten Bremsdrucks und des zweiten Bremsdrucks mittels des mindestens einen angesteuerten Plungers einstellbar ist, und der erste Bremsdruck und der zweite Bremsdruck gleichzeitig reduzierbar sind, indem der Hauptbremszylinder-Innendruck kleiner dem Minimum des ersten Bremsdrucks und des zweiten Bremsdrucks mittels des mindestens einen angesteuerten Plungers einstellbar ist. Wahlweise kann bei einem derartigen weiteren Betriebsmodus auf den Einsatz einer Pumpe oder eines Radauslassventils (nahezu) verzichtet werden.

Die in den vorausgehenden Absätzen beschriebenen Vorteile sind auch bei einem Bremssystem für ein Fahrzeug mit einer derartigen Steuervorrichtung gewährleistet.

Des Weiteren sind die erläuterten Vorteile realisierbar durch ein Ausführen des korrespondierenden Verfahrens zum Betreiben eines Bremssystems eines Fahrzeugs. Es wird darauf hingewiesen, dass das Verfahren zum Betreiben eines Bremssystems eines Fahrzeugs entsprechend den oberen Ausführungsformen weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1A bis 1G: Koordinatensysteme und Diagramme zum Erläutern einer Ausführungsform des Verfahrens zum Betreiben eines Bremssystems eines Fahrzeugs; und
- Fig. 2: eine schematische Darstellung einer Ausführungsform der Steuervorrichtung.

### Ausführungsformen der Erfindung

Fig. 1A bis 1G zeigen Koordinatensysteme und Diagramme zum Erläutern einer Ausführungsform des Verfahrens zum Betreiben eines Bremssystems eines Fahrzeugs.

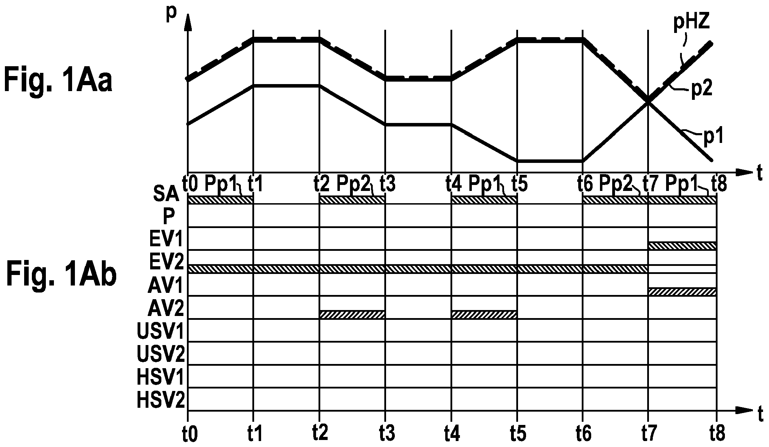

Fig. 1Aa bis 1 Ga zeigen Koordinatensysteme, deren Abszissen eine Zeitachse t sind und deren Ordinaten einen Druck p wiedergeben. In die Koordinatensysteme der Fig. 1Aa bis 1 Ga sind ein in mindestens einem ersten Radbremszylinder eines ersten Bremskreises des Bremssystems eingestellter/eingesteuerter erster Bremsdruck p1 und ein in mindestens einem zweiten Radbremszylinder eines zweiten Bremskreises des Bremssystems eingestellter/eingesteuerter zweiter Bremsdruck p2 eingetragen. Außerdem ist in die Koordinatensysteme der Fig. 1Aa bis 1Ga auch ein in einem Hauptbremszylinder des Bremssystems eingestellter/eingesteuerter Hauptbremszylinder-Innendruck pHZ eingetragen.

Jeder der Bremskreise des Bremssystems kann beispielsweise zwei Radbremszylinder aufweisen. Das im Weiteren beschriebene Verfahren ist jedoch nicht auf die Anbindung einer bestimmten Anzahl von Radbremszylindern an den ersten Bremskreis oder an den zweiten Bremskreis beschränkt.

Der erste Bremskreis kann z.B. der Vorderachs-Bremskreis sein, während der zweite Bremskreis als Hinterachs-Bremskreis einsetzbar ist. Die Ausführbarkeit des Verfahrens ist jedoch nicht auf diese Aufteilung der Bremskreise limitiert. Außerdem können die einem Bremskreis zugeordneten Räder auch auf einer gemeinsamen Seite oder diagonal am Fahrzeug angeordnet sein.

Die in den Fig. 1Ab bis 1 Gb wiedergegebenen Diagramme geben eine Einsetzhäufigkeit und/oder eine ausgeführte Leistung verschiedener hydraulischer Komponenten des Bremssystems wieder. Die Abszissen der Diagramme der Fig. 1Ab bis 1Gb sind erneut die Zeitachse t. Die mittels der Fig. 1Ab bis 1Gb in ihrer Einsetzhäufigkeit und/oder ihrer Leistung wiedergegebenen hydraulischen Komponenten des Bremssystems sind mindestens ein Plunger SA als Beispiel für mindestens eine einsetzbare Hauptbremszylinder-Druckvariiereinrichtung SA, mindestens eine Pumpe P je Bremskreis, mindestens ein erstes Radeinlassventil EV1des ersten Bremskreises, mindestens ein zweites Radeinlassventil EV2 des zweiten Bremskreises, mindestens ein erstes Radauslassventil AV1 des ersten Bremskreises, mindestens ein zweites Radauslassventil AV2 des zweiten Bremskreises, ein erstes Umschaltventil USV1 des ersten Bremskreises, ein zweites Umschaltventil USV2 des zweiten Bremskreises, ein erstes Hochdruckschaltventil HSV1 des ersten Bremskreises und ein zweites Hochdruckschaltventil HSV2 des zweiten Bremskreises. Es wird jedoch darauf hingewiesen, dass die Ausführbarkeit des im Weiteren beschriebenen Verfahrens nicht auf eine Ausstattung des Bremssystems mit allen diesen Komponenten limitiert ist.

Beim Ausführen des Verfahrens zum Betreiben eines Bremssystems eines Fahrzeugs wird in einem ersten Verfahrensschritt ein auszuführender Betriebsmodus aus mindestens zwei ausführbaren Betriebsmoden des Bremssystems zum Variieren des ersten Bremsdrucks p1 (in dem mindestens einen ersten Radbremszylinder des ersten Bremskreises) und des zweiten Bremsdrucks p2 (in dem mindestens einen zweiten Radbremszylinder des zweiten Bremskreises) ausgewählt. Jeder der mindestens zwei ausführbaren Betriebsmoden ist geeignet zum Variieren des ersten Bremsdrucks p1 (in dem mindestens einen ersten Radbremszylinder) entsprechend eines vorgegebenen ersten Soll-Bremsdrucks und/oder Soll-Bremsdruckverlaufs und zum Variieren des zweiten Bremsdrucks p2 (in dem mindestens einen zweiten Radbremszylinder) entsprechend eines vorgegebenen zweiten Soll-Bremsdrucks und/oder Soll-Bremsdruckverlaufs.

Der erste Soll-Bremsdruck/Soll-Bremsdruckverlauf und/oder der zweite Soll-Bremsdruck/Soll-Bremsdruckverlauf können von einem Fahrer des Fahrzeugs mittels einer Betätigung eines Bremsbetätigungselements des Fahrzeugs und/oder von einer automatischen Geschwindigkeitssteuervorrichtung des Fahrzeugs vorgegeben werden. Beispielsweise können der erste Soll-Bremsdruck/Bremsdruckverlauf und/oder der zweite Soll-Bremsdruck/Soll-Bremsdruckverlauf unter Berücksichtigung einer Fahrerbremskraft, eines Fahrerbremsdrucks oder eines Verstellwegs des Bremsbetätigungselements, wie insbesondere eines Stangenwegs, festgelegt/vorgegeben sein.

Unter dem Variieren des ersten Bremsdrucks p1 entsprechend des vorgegebenen ersten Soll-Bremsdrucks und/oder Soll-Bremsdruckverlaufs kann verstanden werden, dass der erste Bremsdruck p1 (in dem mindestens einen ersten Radbremszylinder) so gesteigert, konstant gehalten oder reduziert wird, dass der erste Bremsdruck p1 (nahezu) gleich einem aktuellen Wert des vorgegebenen ersten Soll-Bremsdrucks und/oder Soll-Bremsdruckverlaufs ist/wird. Entsprechend ist unter dem Variieren des zweiten Bremsdrucks p2 entsprechend eines vorgegebenen zweiten Soll-Bremsdrucks und/oder Soll-Bremsdruckverlaufs ein derartiges Steigern, konstant Halten oder Reduzieren des zweiten Bremsdrucks p2 zu verstehen, dass der (in dem mindestens einen zweiten Radbremszylinder vorliegende) zweite Bremsdruck p2 (nahezu) gleich einem aktuellen Wert des vorgegebenen zweiten Soll-Bremsdrucks und/oder Soll-Bremsdruckverlaufs ist/bleibt.

Das Auswählen des auszuführenden Betriebsmodus aus den mindestens zwei ausführbaren Betriebsmoden im ersten Verfahrensschritt erfolgt unter Berücksichtigung mindestens einer bereitgestellten Vorgabegröße. Beispielsweise können beim Auswählen des auszuführenden Betriebsmodus ein Fahrzeugtyp des Fahrzeugs, eine Fahrsituation, eine Verkehrssituation und/oder eine Umgebungsbedingung als die mindestens eine bereitgestellte Vorgabegröße berücksichtigt werden. Auch ein Typ mindestens einer Komponente des Bremssystems, ein Zustand mindestens einer Komponente des Bremssystems, ein in mindestens einer hydraulischen Komponente des Bremssystems vorliegender Druck und/oder ein in mindestens einer hydraulischen Komponente des Bremssystems vorhandenes Bremsflüssigkeitsvolumen können als die mindestens eine Vorgabegröße berücksichtigt werden. Beispielsweise kann eine Druckdifferenz zwischen den beiden Bremsdrücken p1 und p2 als die mindestens eine Vorgabegröße berücksichtigt werden. Ebenso ist ein Füllvolumen mindestens einer Speicherkammer des Bremssystems als die mindestens eine Vorgabegröße berücksichtigbar. Die mindestens eine Vorgabegröße kann mittels mindestens eines Sensors fortlaufend neu ermittelt werden. Als Alternative oder Ergänzung dazu kann die mindestens eine Vorgabegröße auch bei einer Installation einer das Verfahren ausführenden Vorrichtung einprogrammiert und/oder von einer fahrzeugeigenen Datenspeichereinheit abgefragt werden.

Das hier beschriebene Verfahren ermöglicht die Nutzung/Auswahl eines in Hinblick auf die mindestens eine Vorgabegröße optimierten Betriebsmodus zum Betreiben des Bremssystems. Aus mindestens zwei Betriebsmoden kann gezielt der Betriebsmodus gewählt werden, welcher bezüglich eines Fahrkomforts und/oder einer Energieeffizienz am Vorteilhaftesten ist. Die vorliegende Erfindung gewährleistet somit ein komfortables und energieeffizientes Abbremsen eines Fahrzeugs. Wie nachfolgend genauer ausgeführt wird, kann aus den mindestens zwei ausführbaren Betriebsmoden insbesondere der Betriebsmodus gewählt werden, welcher bei dem Fahrzeugtyp des Fahrzeugs, bzw. bei der vorliegenden Montage der verschiedenen hydraulischen Komponenten des Bremssystems, das geräuschärmste Abbremsen des Fahrzeugs gewährleistet. Die mindestens eine Vorgabegröße ist in diesem Fall vorzugsweise der Fahrzeugtyp, bzw. eine Information bezüglich der räumlichen Anordnung der verschiedenen hydraulischen Komponenten des Bremssystems. Es wird jedoch darauf hingewiesen, dass eine derartige Ausführung des Verfahrens nur beispielhaft zu interpretieren ist. Das Verfahren kann auch zur Realisierung anderer Vorteile ausgeführt werden.

Unter den mindestens zwei ausführbaren Betriebsmoden des Bremssystems sind zumindest ein erster ausführbarer Betriebsmodus und ein zweiter ausführbarer Betriebsmodus zu verstehen. Dabei ist gewährleistet, dass bei einem Betreiben des Bremssystems in dem ersten ausführbaren Betriebsmodus der erste Bremsdruck p1 in dem mindestens einen ersten Radbremszylinder (entsprechend dem vorgegebenen ersten Soll-Bremsdruck und/oder Soll-Bremsdruckverlauf) und der zweite Bremsdruck p2 in dem mindestens einen zweiten Radbremszylinder (entsprechend dem vorgegebenen zweiten Soll-Bremsdruck und/oder Soll-Bremsdruckverlauf) verlässlich eingesteuert/eingestellt werden. Dies geschieht, indem zumindest eine erste hydraulische Komponente des Bremssystems mit einer ersten Häufigkeit und/oder einer ersten Leistung und eine zweite hydraulische Komponente des Bremssystems mit einer zweiten Häufigkeit und/oder einer zweiten Leistung eingesetzt/betrieben werden. Entsprechend werden auch bei einem Betreiben des Bremssystems in dem zweiten ausführbaren Betriebsmodus der erste Bremsdruck p1 (entsprechend dem ersten Soll-Bremsdruck und/oder Soll-Bremsdruckverlauf) in dem mindestens einen ersten Radbremszylinder und der zweite Bremsdruck p2 (entsprechend dem zweiten Soll-Bremsdruck und/oder Soll-Bremsdruckverlauf) in dem mindestens einen zweiten Radbremszylinder eingestellt/eingesteuert, indem zumindest die erste hydraulische Komponente mit einer niedrigeren Häufigkeit als der ersten Häufigkeit und/oder einer niedrigeren Leistung als der ersten Leistung und die zweite hydraulische Komponente mit einer höheren Häufigkeit als der zweiten Häufigkeit und/oder einer höheren Leistung als der zweiten Leistung eingesetzt werden. Darunter kann auch verstanden werden, dass von den beiden hydraulischen Komponenten im ersten Betriebsmodus ausschließlich die erste hydraulische Komponente und/oder im zweiten Betriebsmodus nur die zweite hydraulische Komponente eingesetzt werden. Es wird hier darauf hingewiesen, dass trotz der unterschiedlichen Leitungen und/oder Einsetzhäufigkeiten der beiden hydraulischen Komponenten jeweils die gleichen Druckwerte für die Bremsdrücke p1 und p2 in allen verschiedenen auswählbaren Betriebsmoden einstellbar/einsteuerbar sind.

Bei der mittels der Fig. 1A bis 1G wiedergegebenen Ausführungsform kann der auszuführende Betriebsmodus aus sieben ausführbaren Betriebsmoden des Bremssystems ausgewählt werden. Es wird jedoch darauf hingewiesen, dass diese Anzahl von ausführbaren Betriebsmoden und ihre im Weiteren beschriebene Auslegung lediglich beispielhaft zu interpretieren ist.

In einem zweiten Verfahrensschritt wird das Bremssystem in dem ausgewählten Betriebsmodus so betrieben, dass der erste Bremsdruck p1 in dem mindestens einen ersten Radbremszylinder (entsprechend dem ersten Soll-Bremsdruck und/oder Soll-Bremsdruckverlauf) und der zweite Bremsdruck p2 in dem mindestens einen zweiten Radbremszylinder (entsprechend dem ersten Soll-Bremsdruck und/oder Soll-Bremsdruckverlauf) eingestellt werden. Wie anhand eines Vergleichs der Fig. 1Aa bis 1Ga erkennbar ist, werden unabhängig von dem jeweils ausgewählten Betriebsmodus die gleichen Werte für den ersten Bremsdruck p1 und den zweiten Bremsdruck p2 eingestellt. Somit ist unabhängig von dem ausgewählten Betriebsmodus immer gewährleistbar, dass der Bremswunsch des Fahrers oder die Bremsanforderung der automatischen Geschwindigkeitssteuervorrichtung verlässlich erfüllt werden.

Zum Ausführen des zweiten Verfahrensschritts werden in der hier wiedergegebenen Ausführungsform der mindestens eine Plunger SA (als Beispiels für die mindestens eine Hauptbremszylinder-Druckvariiereinrichtung), die mindestens eine Pumpe P pro Bremskreis (wobei alle Pumpen mittels eines gemeinsamen Motors betreibbar sind), die stromlos offenen Radeinlassventile EV1 und EV2, die stromlos geschlossenen Radauslassventile AV1 und AV2, die stromlos geschlossenen Hochdruckschaltventile HSV1 und HSV2 und die stromlos offenen Umschaltventile USV1 und USV2 (als zumindest die erste hydraulische Komponente und die zweite hydraulische Komponente) eingesetzt/angesteuert. Zum Ausführen des Verfahrens kann somit auf bereits an einem Bremssystem in der Regel vorhandene hydraulische Komponenten zurückgegriffen werden. Die Ausführbarkeit des Verfahrens ist jedoch nicht auf eine Nutzung (aller) in Fig. 1Ab bis 1 Gb aufgezählter hydraulischer Komponenten des Bremssystems limitiert.

Die in Fig. 1Aa bis 1 Ga wiedergegebenen Verläufe/Werte für die Bremsdrücke p1 und p2 sind lediglich beispielhaft zu interpretieren:
Zwischen den Zeiten t0 und t1 nehmen der erste Bremsdruck p1 und der zweite Bremsdruck p2 (wahlweise mit gleicher Steigung) stetig zu, wobei der erste Bremsdruck p1 größer als der zweite Bremsdruck p2 ist/bleibt. Ab der Zeit t1 bleiben die Bremsdrücke p1 und p2 für ein vorgegebenes Zeitintervall konstant. Erst ab der Zeit t2 nehmen der erste Bremsdruck p1 und der zweite Bremsdruck p2 bis zur Zeit t3 (wahlweise mit einer gleichen Steigung) stetig ab, wobei der erste Bremsdruck p1 größer als der zweite Bremsdruck p2 ist/bleibt. Zwischen den Zeiten t3 und t4 bleiben die Bremsdrücke p1 und p2 konstant. Ab der Zeit t4 wird der größere erste Bremsdruck p1 gesteigert, während der kleinere Bremsdruck p2 reduziert wird. Zwischen den Zeiten t5 und t6 werden der erste Bremsdruck p1 und der zweite Bremsdruck p2 konstant gehalten. Ab der Zeit t6 wird der größere erste Bremsdruck p1 reduziert, während der kleinere zweite Bremsdruck p2 gesteigert wird, so dass die Bremsdrücke p1 und p2 zur Zeit t7 den gleichen Wert haben. Danach wird die Steigerung des zweiten Bremsdrucks p2 bis zur Zeit t8 fortgesetzt, während gleichzeitig der erste Bremsdruck p1 reduziert wird. Es wird jedoch nochmals darauf hingewiesen, dass die Ausführbarkeit des Verfahrens nicht auf bestimmte Druckverläufe für die Bremsdrücke p1 und p2 limitiert ist.

Im Weiteren werden Beispiele für die ausführbaren Betriebsmoden vorgestellt, aus welchen der auszuführende Betriebsmodus ausgewählt werden kann. Das Verfahren kann jedoch auch bei einem Weglassen mindestens eines der nachfolgend ausgeführten Beispiele und/oder einem Hinzunehmen eines anderen ausführbaren Betriebsmodus ausgeführt werden.

In den Fig. 1Aa und 1Ab ist ein Radauslassventilnutzender-Betriebsmodus wiedergegebenen, in welchem das Bremssystem betrieben wird, sofern der Radauslassventilnutzende-Betriebsmodus aus den mindestens zwei ausführbaren Betriebsmoden ausgewählt wird. Beim Betreiben des Bremssystems in dem Radauslassventilnutzenden-Betriebsmodus wird der Hauptbremszylinder-Innendruck pHZ in dem Hauptbremszylinder gleich einem Maximum des ersten Bremsdrucks p1 und des zweiten Bremsdrucks p2 mittels des mindestens einen Plungers SA eingestellt. Dazu wird der mindestens eine Plunger SA zwischen den Zeiten t0 und t1, zwischen den Zeiten t4 und t5 und zwischen den Zeiten t7 und t8 so angesteuert, dass der Hauptbremszylinder-Innendruck pHZ entsprechend dem zunehmenden Maximum der (einzustellenden) Bremsdrücke p1 und p2 mit einer ersten Plunger-Leistung Pp1 des mindestens einen Plungers SA gesteigert wird. Außerdem wird der Hauptbremszylinder-Innendruck pHZ zwischen den Zeiten t2 und t3 und zwischen den Zeiten t6 und t7 so angesteuert, dass der Hauptbremszylinder-Innendruck pHZ korrespondierend zu dem abnehmenden Maximum der (einzustellenden) Bremsdrücke p1 und p2 mit einer zweiten Plunger-Leistung Pp2 des mindestens einen Plungers SA reduziert wird.

Zwischen den Zeiten t0 und t7 ist der (einzustellende) zweite Bremsdruck p2 kleiner als der Hauptbremszylinder-Innendruck pHZ. Zum Reduzieren des zweiten Bremsdrucks p2 gegenüber dem Hauptbremszylinder-Innendruck pHZ wird deshalb zwischen den Zeiten t0 und t7 das mindestens eine zweite Radeinlassventil EV2 des zweiten Bremskreises (durch ein Bestromen) angesteuert/zumindest zeitweise in den geschlossenen Zustand gesteuert. Außerdem wird zwischen den Zeiten t2 und t3 und zwischen den Zeiten t4 und t5 das mindestens eine zweite Radauslassventil AV2 des zweiten Bremskreises durch ein Bestromen angesteuert/zumindest zeitweise geöffnet. Entsprechend wird zwischen den Zeiten t7 und t8 der erste Bremsdruck p1 gegenüber dem Hauptbremszylinder-Innendruck pHZ reduziert, indem das mindestens eine erste Radeinlassventil EV1 des ersten Bremskreises zumindest zeitweise in den geschlossenen Zustand und das mindestens eine erste Radauslassventil AV1 des ersten Bremskreises zumindest zeitweise in den geöffneten Zustand mittels eines Bestromens gesteuert werden.

Bei dem in Fig. 1Aa und 1Ab wiedergegebenen Radauslassventilnutzenden-Betriebsmodus werden vor allem die Radauslassventile AV1 und AV2 relativ häufig eingesetzt. Demgegenüber kann bei dem Radauslassventilnutzenden-Betriebsmodus auf ein Aktivieren der mindestens einen Pumpe P pro Bremskreis verzichtet werden. Der in den Fig. 1Aa und 1Ab wiedergegebene Radauslassventilnutzende-Betriebsmodus ist somit vor allem bei einer Priorisierung einer Nutzung der Radauslassventile AV1 und AV2 gegenüber einer Nutzung des mindestens einen Plungers SA und bei einer Priorisierung einer Nutzung des mindestens einen Plungers SA gegenüber einer Nutzung der mindestens einen Pumpe P pro Bremskreis geeignet. Insbesondere kann vor allem wenn ein Betrieb der mindestens einen Pumpe P pro Bremskreis mit unerwünschten Geräuschen verbunden ist, der Radauslassventilnutzende-Betriebsmodus zur Umgehung eines Pumpenbetriebs genutzt werden.

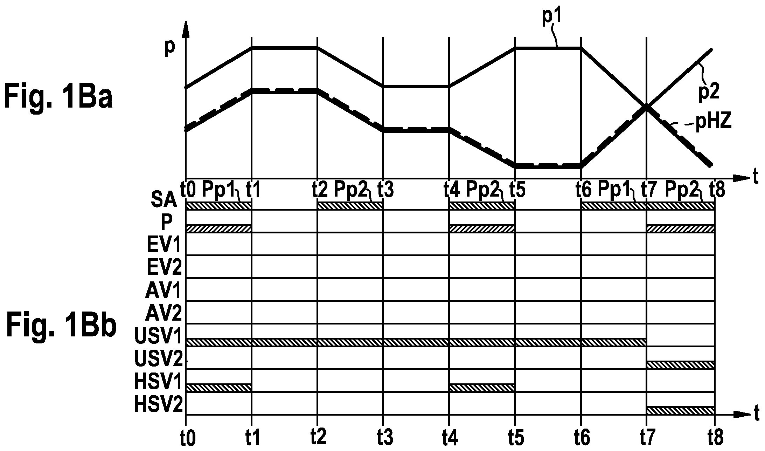

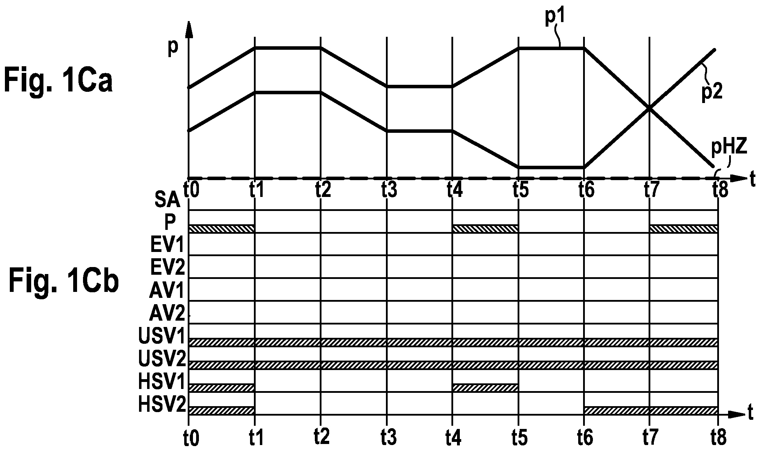

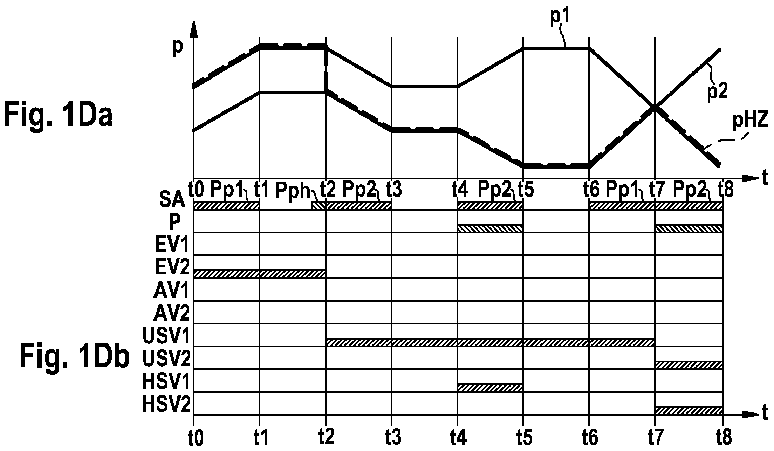

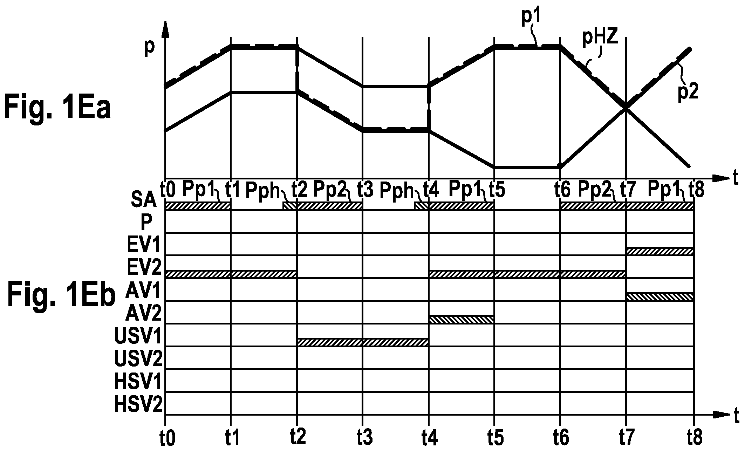

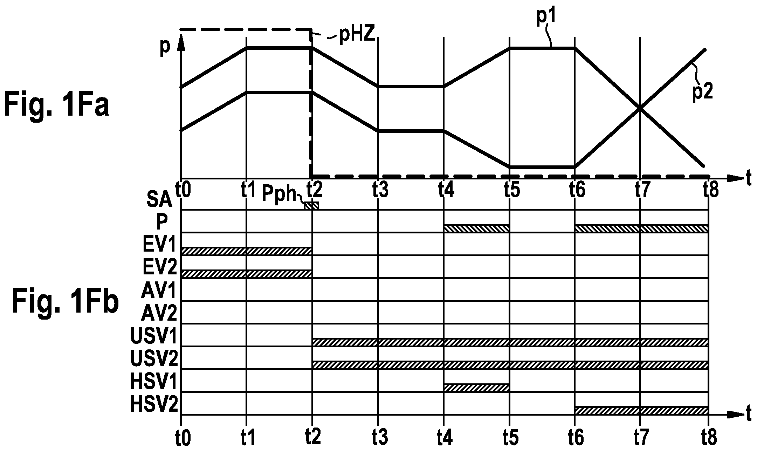

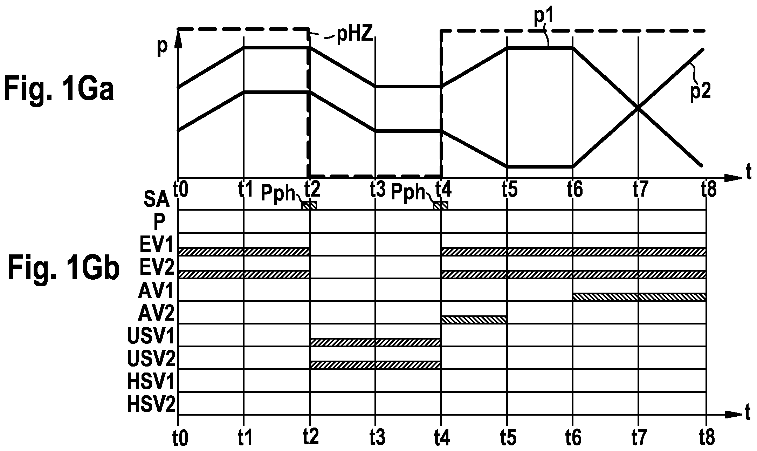

Fig. 1 Ba und 1 Bb geben einen ersten Pumpennutzenden-Betriebsmodus wieder, in welchem das Bremssystem nach einem Auswählen des ersten Pumpennutzenden-Betriebsmodus aus den mindestens zwei ausführbaren Betriebsmoden betrieben wird. Während eines Betreibens des Bremssystems in dem ersten Pumpennutzenden-Betriebsmodus wird der Hauptbremszylinder-Innendruck pHZ gleich einem Minimum des ersten Bremsdrucks p1 und des Bremsdrucks p2 mittels des mindestens einen Plungers SA eingestellt. Dazu wird während der Zeiten t0 und t1 und während der Zeiten t6 und t7 der Hauptbremszylinder-Innendruck pHZ korrespondierend zu dem zunehmenden Minimum der (einzustellenden) Bremsdrücke p1 und p2 mittels des mit der ersten Plunger-Leistung Pp1 betriebenen mindestens einen Plungers SA gesteigert. Außerdem wird zwischen den Zeiten t2 und t3, zwischen den Zeiten t4 und t5 und zwischen den Zeiten t7 und t8 der Hauptbremszylinder-Innendruck pHZ mittels des mit der zweiten Plunger-Leistung Pp2 betriebenen mindestens einen Plungers SA entsprechend dem abnehmenden Minimum der (einzustellenden) Bremsdrücke p1 und p2 reduziert.

Zwischen den Zeiten t0 bis t7 wird ein gegenüber dem Hauptbremszylinder-Innendruck pHZ gesteigerter erster Bremsdruck p1 gewährleistet, indem das erste Umschaltventil USV1 mittels eines Bestromens angesteuert/zumindest zeitweise in den geschlossenen Zustand gesteuert wird. Außerdem wird der erste Bremsdruck p1 zwischen den Zeiten t0 und t1 und zwischen den Zeiten t4 und t5 gesteigert, indem die mindestens eine Pumpe P pro Bremskreis aktiviert wird und das erste Hochdruckschaltventil HSV1 bestromt wird. Entsprechend kann zwischen den Zeiten t7 und t8 auch der zweite Bremsdruck p2 gegenüber dem Hauptbremszylinder-Innendruck pHZ mittels eines Betriebs der mindestens einen Pumpe P pro Bremskreis, einem Ansteuern/Bestromen des zweiten Umschaltventils USV2 und einem Ansteuern/Bestromen des zweiten Hochdruckschaltventils HSV2 gesteigert werden.

Der erste Pumpennutzende-Betriebsmodus ist vor allem dann vorteilhaft, wenn ein Betrieb der mindestens einen Pumpe P pro Bremskreis bevorzugt wird, während ein Betrieb der Radauslassventile AV1 und AV2 abgelehnt wird. Wie anhand der Fig. 1 Ba und 1 Bb erkennbar ist, kann bei den wiedergegebenen Verfahrensschritten auf ein Bestromen der Radauslassventile AV1 und AV2 vollständig verzichtet werden.

Ein zweiter Pumpennutzender-Betriebsmodus ist in Fig. 1 Ca und 1 Cb dargestellt. Beim Betreiben des Bremssystems in dem zweiten Pumpennutzenden-Betriebsmodus wird der Hauptbremszylinder-Innendruck pHZ auf (nahezu) Null eingestellt/gehalten. Zum Gewährleisten eines Hauptbremszylinder-Innendrucks pHZ von (nahezu) Null kann z.B. der Bremskraftverstärker so angesteuert werden, dass trotz einer Betätigung des Bremsbetätigungselements durch den Fahrer ein Einbremsen von diesem in den Hauptbremszylinder unterbunden ist. Ebenso kann ein Leerweg zwischen dem Bremsbetätigungselement und mindestens einem Kolben des Hauptbremszylinders vorliegen, so dass trotz der Betätigung des Bremsbetätigungselements das Einbremsen in den Hauptbremszylinder unterbunden ist. Mittels beider Möglichkeiten ist ein Druckaufbau in dem Hauptbremszylinder trotz der Betätigung des Bremsbetätigungselements verlässlich verhinderbar.

Zum Einstellen der gewünschten Bremsdrücke p1 und p2 werden während des gesamten Zeitintervalls zwischen den Zeiten t0 und t8 das erste Umschaltventil USV1 und das zweite Umschaltventil USV2 bestromt. Das Steigern mindestens eines der Bremsdrücke p1 oder p2 erfolgt mittels eines Betriebs der mindestens einen Pumpe P pro Bremskreis zwischen den Zeiten t0 bis t1, t4 bis t5 und t6 bis t8. Damit der Betrieb der mindestens einen Pumpe P pro Bremskreis eine Steigerung des ersten Bremsdrucks p1 und/oder des zweiten Bremsdrucks p2 bewirkt, wird das Hochdruckschaltventil HSV1 und/oder HSV2 des mindestens einen Bremskreises mit dem zu steigernden Bremsdruck p1 und/oder p2 bestromt. (Durch ein Nicht-Bestromen eines der Hochdruckschaltventile HSV1 oder HSV2 kann trotz des gemeinsamen Betriebs der Pumpen P eine Steigerung des Bremsdrucks p1 oder p2 in dem jeweiligen Bremskreis verhindert werden.)

Der zweite Pumpennutzende-Betriebsmodus gewährleistet einen Verzicht auf ein Einsetzen des mindestens einen Plungers SA und der Radauslassventile AV1 und AV2 während aller dargestellten Verfahrensschritte. Dies ist vor allem vorteilhaft, sofern ein Betrieb der mindestens einen Pumpe deutlich gegenüber einem Betrieb des mindestens einen Plungers SA oder der Radauslassventile AV1 und AV2 bevorzugt wird.

Fig. 1 Da, 1Db, 1 Ea und 1 Eb zeigen verschiedene Plungernutzende-Betriebsmoden, in welchen das Bremssystem jeweils nach einem Auswählen des betreffenden Plungernutzenden-Betriebsmodus aus den mindestens zwei ausführbaren Betriebsmoden betrieben werden kann. In beiden Plungernutzenden-Betriebsmoden erfolgt ein gleichzeitiges Steigern des ersten Bremsdrucks p1 und des zweiten Bremsdrucks p2 zwischen den Zeiten t0 und t1, indem der Hauptbremszylinder-Innendruck pHZ gleich dem Maximum der (einzustellenden) Bremsdrücke p1 und p2 mittels des mindestens einen mit der ersten Plunger-Leistung Pp1 betriebenen Plungers SA eingestellt wird. Um zwischen den Zeiten t0 und t2 einen zweiten Bremsdruck p2 kleiner als dem ersten Bremsdruck p1 und dem Hauptbremszylinder-Innendruck pHZ zu gewährleisten, wird das mindestens eine zweite Radeinlassventil EV2 des zweiten Bremskreises durch ein Bestromen angesteuert/zumindest zeitweise in den geschlossenen Zustand gesteuert. Ein gemeinsames Reduzieren des ersten Bremsdrucks p1 und des zweiten Bremsdrucks p2 zwischen den Zeiten t2 und t3 erfolgt, indem der Hauptbremszylinder-Innendruck pHZ gleich dem Minimum der (einzustellenden) Bremsdrücke p1 und p2 mittels des mindestens einen Plungers SA eingestellt wird. Mittels eines Ansteuerns/Bestromens des ersten Umschaltventils USV1 kann zwischen den Zeiten t2 und t4 verhindert werden, dass der erste Bremsdruck p1 auf den zweiten Bremsdruck p2 und den Hauptbremszylinder-Innendruck pHZ absinkt.

Allerdings erfordern die mittels der Fig. 1 Da, 1Db, 1 Ea und 1 Eb wiedergegebenen Verfahren eine signifikant erhöhte Plunger-Leistung Pph des mindestens einen Plungers SA während eines Wechsels zwischen einem gemeinsamen Steigern/konstant Halten der Bremsdrücke p1 und p2 und einem gemeinsamen Reduzieren der Bremsdrücke p1 und p2. (Die Plunger-Leistung Pph kann deutlich über der ersten Plunger-Leistung Pp1 und der zweiten Plunger-Leistung Pp2 liegen.) Die beiden Plungernutzenden-Betriebsmoden sind somit vorteilhaft, sofern auch ein leistungsstarker Betrieb des mindestens einen

Plungers SA mit der Plunger-Leistung Pph aufgrund einer Anordnung des mindestens einen Plungers SA kaum ein/kein (weiterleitbares) Geräusch erzeugt.

Der in Fig. 1 Da und 1 Db wiedergegebene erste Plungernutzende-Betriebsmodus nutzt eine erste Ansteuerstrategie zwischen den Zeiten t4 bis t8 zum Steigern lediglich eines Bremsdrucks p1 oder p2 während einer gleichzeitigen Reduzierung des anderen Bremsdrucks p1 oder p2. Dabei wird der Hauptbremszylinder-Innendruck pHZ gleich einem Minimum der einzustellenden Bremsdrücke p1 und p2 gesteigert, reduziert oder konstant gehalten. Um zu gewährleisten, dass der erste Bremsdruck p1 zwischen den Zeiten t4 und t7 größer als der Hauptbremszylinder-Innendruck pHZ ist/bleibt, wird das erste Umschaltventil USV1 mittels eines Bestromens angesteuert/in seinen geschlossenen Zustand gesteuert. Zum Steigern ausschließlich des ersten Bremsdrucks p1 werden zwischen den Zeiten t4 und t5 die Pumpen aktiviert. Durch ein Bestromen des ersten Hochdruckschaltventils HSV1 wird sichergestellt, dass der Betrieb der mindestens einen Pumpe P pro Bremskreis zwischen den Zeiten t4 und t5 (nur) eine Steigerung des ersten Bremsdrucks p1 bewirkt. Entsprechend werden zwischen den Zeiten t7 und t8 das zweite Umschaltventil USV2 und das zweite Hochdruckschaltventil HSV2 bestromt und geschlossen, um mittels des Betriebs der Pumpen P ausschließlich den zweiten Bremsdruck p2 zu steigern.

Bei dem in Fig. 1Ea und 1 Eb wiedergegebenen zweiten Plungernutzenden-Betriebsmodus wird zwischen den Zeiten t4 und t8 eine andere Ansteuerstrategie ausgeführt. Bei einer Steigerung lediglich eines Bremsdrucks p1 oder p2 während einer gleichzeitigen Reduzierung des anderen Bremsdrucks p1 oder p2 wird der Hauptbremszylinder-Innendruck pHZ entsprechend dem Maximum der beiden (einzustellenden) Bremsdrücke p1 und p2 eingesteuert. Beispielsweise wird zwischen den Zeiten t4 und t7 der Hauptbremszylinder-Innendruck pHZ auf den (einzustellenden) ersten Bremsdruck p1 eingesteuert. Um einen kleineren zweiten Bremsdruck p2 zwischen den Zeiten t4 und t7 zu gewährleisten, wird bei dem zweiten Plungernutzenden-Betriebsmodus das mindestens eine zweite Radeinlassventil EV2 angesteuert/zumindest zeitweise durch ein Bestromen geschlossen. Eine Reduzierung des zweiten Bremsdrucks p2 erfolgt zwischen den Zeiten t4 und t5 durch ein Bestromen zum zumindest zeitweisen Öffnen des mindestens einen zweiten Radauslassventils AV2. Auch eine Steigerung des zweiten Bremsdrucks p2 ist zwischen den Zeiten t6 und t7 möglich, indem das mindestens eine zweite Radeinlassventil EV2 zumindest zeitweise wieder geöffnet wird. Zwischen den Zeiten t7 und t8 wird der Hauptbremszylinder-Innendruck pHZ gleich dem
zweiten Bremsdruck p2 eingesteuert, während der erste Bremsdruck p1 durch ein zumindest zeitweises Ansteuern/Bestromen des mindestens einen ersten Radeinlassventils EV1 und ein zumindest zeitweises Ansteuern/Bestromen des mindestens einen ersten Radauslassventils AV1 reduziert wird.

Der mittels der Fig. 1 Ea und 1 Eb wiedergegebene zweite Plungernutzende-Betriebsmodus eignet sich vor allem, sofern ein Betrieb der mindestens einen Pumpe P jedes Bremskreises möglichst verhindert werden soll. Die Umgehung eines Betriebs der mindestens einen Pumpe P ist möglich, indem stattdessen die Radeinlassventile EV1 und EV2 und die Radauslassventile AV1 und AV2 häufiger eingesetzt und der mindestens eine Plunger häufiger mit der signifikant erhöhten Plunger-Leistung Pph betrieben werden.

Bei den in Fig. 1 Fa, 1 Fb, 1 Ga und 1 Gb wiedergegebenen Plungereinsetzenden-Betriebsmoden werden der erste Bremsdruck p1 und der zweite Bremsdruck p2 gleichzeitig gesteigert, indem der Hauptbremszylinder-Innendruck pHZ (deutlich) größer dem Maximum des ersten Bremsdrucks p1 und des zweiten Bremsdrucks p2 mittels des mindestens einen Plungers SA eingestellt wird. Das Einstellen der unterschiedlichen Bremsdrücke p1 und p2 in den jeweiligen Bremskreisen erfolgt durch ein Ansteuern/Bestromen der Radeinlassventile EV1 und EV2. Zum gleichzeitigen Reduzieren des ersten Bremsdrucks p1 und des zweiten Bremsdrucks p2 wird der Hauptbremszylinder-Innendruck pHZ deutlich kleiner als das Minimum des ersten Bremsdrucks p1 und des zweiten Bremsdrucks p2 mittels des mindestens einen Plungers SA eingestellt. Dies erfordert vor allem bei einem Wechsel zwischen einem Steigern/konstant Halten der Bremsdrücke p1 und p2 und einem Reduzieren der Bremsdrücke p1 und p2 eine signifikant erhöhte Plunger-Leistung Pph des mindestens einen Plungers SA. Zum Einstellen der unterschiedlichen Bremsdrücke p1 und p2 werden zwischen den Zeiten t2 und t4 die Umschaltventile USV1 und USV2 angesteuert/bestromt.

Die mittels der Fig. 1 Fa, 1 Fb, 1 Ga und 1 Gb wiedergegebenen Plungereinsetzenden-Betriebsmoden eignen sich vor allem, sofern auch ein leistungsstarker Betrieb des mindestens einen Plungers SA gerne gegenüber einem Pumpenbetrieb oder einem Betrieb der Radauslassventile in Kauf genommen wird. Insbesondere kann zum Ausführen der Plungereinsetzenden-Betriebsmoden mindestens ein kostengünstiger Plunger SA verwendet werden, welcher lediglich für eine Grobeinstellung des Hauptbremszylinder-Innendrucks pHZ geeignet ist. Bei der Auswahl des ausgeführten Betriebsmodus kann somit auch ein Typ der mindestens einen hydraulischen Komponente berücksichtigt werden.

Zwischen den Zeiten t4 und t8 führen die Plungereinsetzenden-Bremsmoden der Fig. 1 Fa, 1 Fb, 1 Ga und 1 Gb unterschiedliche Ansteuerstrategien aus. Bei dem ersten Plungereinsetzenden-Betriebsmodus der Fig. 1 Fa und 1 Fb erfolgt das Steigern lediglich eines der Bremsdrücke p1 und p2 mittels eines Betriebs der mindestens einen Pumpe P zwischen den Zeiten t4 und t5 und zwischen den Zeiten t6 und t8. Um zu gewährleisten, dass einer der Bremsdrücke p1 oder p2 gesteigert wird, wird zwischen den Zeiten t4 und t5 und zwischen den Zeiten t6 und t8 das jeweilige Hochdruckschaltventil HSV1 oder HSV2 des Bremskreises mit dem zu steigernden Bremsdruck p1 oder p2 bestromt/angesteuert. Eine Feineinstellung der Bremsdrücke p1 und p2 kann mittels eines Bestromens der Umschaltventile USV1 und USV2 zwischen den Zeiten t4 und t8 ausgeführt werden. Der Betriebsmodus der Fig. 1 Fa und 1 Fb eignet sich somit besonders, sofern ein Betrieb der mindestens einen Pumpe pro Bremskreis gegenüber einem Einsetzen der Radauslassventile AV1 oder AV2 priorisiert wird.

Bei dem Betriebsmodus der Fig. 1 Ga und 1 Gb erfolgt das Steigern lediglich eines der Bremsdrücke p1 und p2 durch ein Einstellen des Hauptbremszylinder-Innendrucks pHZ auf einen Wert (deutlich) über dem Maximum der (einzustellenden) Bremsdrücke p1 und p2. Zum Reduzieren des anderen Bremsdrucks p1 und p2 werden die den jeweiligen Radbremszylindern zugeordneten Radauslassventile AV1 oder AV2 angesteuert. Eine Feineinstellung der Bremsdrücke p1 und p2 erfolgt zwischen den Zeiten t4 und t8 über ein Ansteuern/Bestromen der Radeinlassventile EV1 und EV2.

Somit kann bei dem Betriebsmodus der Fig. 1 Ga und 1 Gb bei allen dargestellten Verfahrensschritten auf einem Betrieb der mindestens eine Pumpe P pro Bremskreis vollständig verzichtet werden. Der Betriebsmodus der Fig. 1 Ga und 1 Gb eignet sich somit vor allem, sofern aufgrund einer Anordnung/Auslegung der Pumpen P deren Betrieb mit einem deutlich besser wahrnehmbaren Geräusch verbunden ist als ein entsprechender Betrieb des mindestens einen Plungers SA oder der Radauslassventile AV1 und AV2.

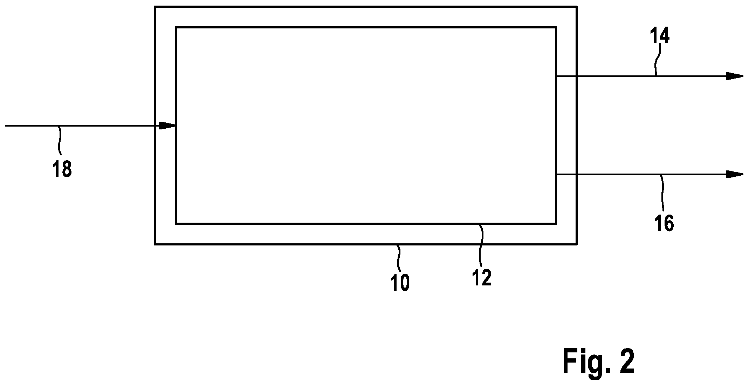

Fig. 2 zeigt eine schematische Darstellung einer Ausführungsform der Steuervorrichtung.

Die in Fig. 2 schematisch dargestellte Steuervorrichtung 10 ist zusammen mit einem (nicht dargestellten) Bremssystem eines Fahrzeugs einsetzbar. Die Steuervorrichtung 10 weist eine Elektronikeinrichtung 12 auf, welche dazu ausgelegt ist, zumindest eine erste hydraulische Komponente des Bremssystems mittels mindestens eines ersten Steuersignals 14 und eine zweite hydraulische Komponente des Bremssystems mittels mindestens eines zweiten Steuersignals 16 anzusteuern. Mittels der Steuersignale 14 und 16 ist das Bremssystem in mindestens einem ersten ausführbaren Betriebsmodus betreibar. In dem ersten ausführbaren Betriebsmodus sind zumindest die angesteuerte erste hydraulische Komponente mit einer ersten Häufigkeit und/oder einer ersten Leistung und die angesteuerte zweite hydraulische Komponente mit einer zweiten Häufigkeit und/oder einer zweiten Leistung derart einsetzbar, dass ein erster Bremsdruck in mindestens einem ersten Radbremszylinder eines ersten Bremskreises des Bremssystems entsprechend eines vorgegebenen ersten Soll-Bremsdrucks und/oder Soll-Bremsdruckverlaufs und ein zweiter Bremsdruck in mindestens einem zweiten Radbremszylinder eines zweiten Bremskreises des Bremssystems entsprechend eines vorgegebenen zweiten Soll-Bremsdrucks und/oder Soll-Bremsdruckverlaufs einstellbar sind.

Außerdem ist die Elektronikeinrichtung zusätzlich dazu ausgelegt, das mittels der Steuersignale 14 und 16 angesteuerte Bremssystem zumindest noch in einen zweiten ausführbaren Betriebsmodus zu betreiben. In dem zweiten ausführbaren Betriebsmodus sind zumindest die angesteuerte erste hydraulische Komponente mit einer niedrigeren Häufigkeit als der ersten Häufigkeit und/oder einer niedrigeren Leistung als der ersten Leistung und die angesteuerte zweite hydraulische Komponente mit einer höheren Häufigkeit als der zweiten Häufigkeit und/oder einer höheren Leistung als der zweiten Leistung auch derart einsetzbar, dass der (gleiche) erste Bremsdruck in dem mindestens einen ersten Radbremszylinder (entsprechend dem gleichen vorgegebenen ersten Soll-Bremsdruck und/oder Soll-Bremsdruckverlauf) und der (gleiche) zweite Bremsdruck in dem mindestens einen zweiten Radbremszylinder (entsprechend dem gleichen vorgegebenen zweiten Soll-Bremsdruck und/oder Soll-Bremsdruckverlauf) einstellbar sind.

Zusätzlich ist die Elektronikeinrichtung 12 zusätzlich dazu ausgelegt, unter Berücksichtigung mindestens einer bereitgestellten Vorgabegröße 18 einen auszuführenden Betriebsmodus aus den mindestens zwei ausführbaren Betriebsmoden auszuwählen und das Bremssystem in dem ausgewählten Betriebsmodus derart zu betreiben, dass der erste Bremsdruck in dem mindestens einen ersten Radbremszylinder und der zweite Bremsdruck in dem mindestens einen zweiten Radbremszylinder einstellbar sind. Die Steuervorrichtung 10 gewährleistet somit ebenfalls die oben schon beschriebenen Vorteile.

Vorzugsweise ist die Elektronikeinrichtung 12 dazu ausgelegt, einen Fahrzeugtyp des mit der Steuervorrichtung ausgestatteten Fahrzeugs, eine Fahrsituation, eine Verkehrssituation und/oder eine Umgebungsbedingung als die mindestens eine bereitgestellte Vorgabegröße 18 zu berücksichtigen. Weitere Beispiele für die mindestens eine bereitgestellte Vorgabegröße 18 sind oben aufgezählt. Die Elektronikeinrichtung 12 kann dazu ausgelegt sein, mindestens einen Plunger, mindestens eine Pumpe (pro Bremskreis), mindestens ein Radeinlassventil, mindestens ein Radauslassventil, mindestens ein Hochdruckschaltventil und/oder mindestens ein Umschaltventil als die erste Komponente und/oder die zweite Komponente anzusteuern. Die hier aufgezählten Ausführungsbeispiele für die ansteuerbaren hydraulischen Komponenten sind jedoch nur beispielhaft zu interpretieren.

In einer vorteilhaften Ausführungsform ist die Elektronikeinrichtung 12 dazu ausgelegt, das Bremssystem in einen Radauslassventilnutzenden-Betriebsmodus ausgewählt aus den mindestens zwei ausführbaren Betriebsmoden so zu betreiben, dass ein Hauptbremszylinder-Innendruck in einem Hauptbremszylinder des Bremssystems gleich einem Maximum des ersten Bremsdrucks und des zweiten Bremsdrucks mittels des mindestens einen angesteuerten Plungers einstellbar ist, und der erste Bremsdruck oder der zweite Bremsdruck gegenüber dem Hauptbremszylinder-Innendruck zumindest mittels des mindestens einen angesteuerten Radauslassventils reduzierbar ist. Ebenso kann die Elektronikeinrichtung dazu ausgelegt sein, das Bremssystem in einen Pumpennutzenden-Betriebsmodus ausgewählt aus den mindestens zwei ausführbaren Betriebsmoden so zu betreiben, dass der Hauptbremszylinder-Innendruck gleich einem Minimum des ersten Bremsdrucks und des zweiten Bremsdrucks mittels des mindestens einen angesteuerten Plungers einstellbar ist, und der erste Bremsdruck oder der zweite Bremsdruck gegenüber dem Hauptbremszylinder-Innendruck zumindest mittels der mindestens einen angesteuerten Pumpe steigerbar ist. Des Weiteren kann die Elektronikeinrichtung dazu ausgelegt sein, das Bremssystem in einen Plungernutzenden-Betriebsmodus ausgewählt aus den mindestens zwei ausführbaren Betriebsmoden so zu betreiben, dass der erste Bremsdruck und der zweite Bremsdruck gleichzeitig steigerbar sind, indem der Hauptbremszylinder-Innendruck gleich dem Maximum des ersten Bremsdrucks und des zweiten Bremsdrucks mittels des mindestens einen angesteuerten Plungers einstellbar ist, und der erste Bremsdruck und der zweite Bremsdruck gleichzeitig reduzierbar sind, indem der Hauptbremszylinder-Innendruck gleich dem Minimum des ersten Bremsdrucks und des zweiten Bremsdrucks mittels des mindestens einen angesteuerten Plungers einstellbar ist. Ergänzend kann die Elektronikeinrichtung dazu ausgelegt sein, das Bremssystem in einen Plungereinsetzenden-Betriebsmodus ausgewählt aus den mindestens zwei ausführbaren Betriebsmoden so zu betreiben, dass der erste Bremsdruck und der zweite Bremsdruck gleichzeitig steigerbar sind, indem der Hauptbremszylinder-Innendruck größer dem Maximum des ersten Bremsdrucks und des zweiten Bremsdrucks mittels des mindestens einen angesteuerten Plungers einstellbar ist, und der erste Bremsdruck und der zweite Bremsdruck gleichzeitig reduzierbar sind, indem der Hauptbremszylinder-Innendruck kleiner dem Minimum des ersten Bremsdrucks und des zweiten Bremsdrucks mittels des mindestens einen angesteuerten Plungers einstellbar ist.

Die Steuervorrichtung 10 kann derart ausgelegt sein, dass mittels ihr alle oben ausgeführten Verfahrensschritte ausführbar sind. Die Ausbildbarkeit der Steuervorrichtung 10 ist jedoch nicht darauf limitiert.

Die Vorteile der Steuervorrichtung 10 sind auch bei einem Bremssystem für ein Fahrzeug mit der Steuervorrichtung 10 gewährleistet.

Die Steuervorrichtung 10, dass damit ausgestattete Bremssystem und das korrespondierende Verfahren bieten zu jeder Zeit einer Bremsung ein situationsabhängiges Optimum aus höchstmöglichem Komfort, wie insbesondere geringer Geräuschemission, und maximal möglicher Rekuperationseffizienz. Die verhältnismäßig freie Einstellbarkeit des ersten Bremsdrucks und des zweiten Bremsdrucks kann dazu genutzt werden, ein zeitlich variierendes Generator-Bremsmoment mindestens eines generatorisch einsetzbaren Elektromotors zu verblenden. Es wird jedoch darauf hingewiesen, dass die Einsetzbarkeit der Steuervorrichtung 10 und des Verfahrens nicht auf ein regeneratives Bremssystem limitiert ist.

## Patentansprüche

1. Steuervorrichtung (10) für ein Bremssystem eines Fahrzeugs mit:
einer Elektronikeinrichtung (12), welche dazu ausgelegt ist, zumindest eine erste hydraulische Komponente (SA, P, EV1, EV2, AV1, AV2, USV1, USV2, HSV1, HSV2) des Bremssystems und eine zweite hydraulische Komponente (SA, P, EV1, EV2, AV1, AV2, USV1, USV2, HSV1, HSV2) des Bremssystems derart anzusteuern, dass das Bremssystem in mindestens einem ersten ausführbaren Betriebsmodus so betreibar ist, dass zumindest die angesteuerte erste hydraulische Komponente (SA, P, EV1, EV2, AV1, AV2, USV1, USV2, HSV1, HSV2) mit einer ersten Häufigkeit und/oder einer ersten Leistung und die angesteuerte zweite hydraulische Komponente (SA, P, EV1, EV2, AV1, AV2, USV1, USV2, HSV1, HSV2) mit einer zweiten Häufigkeit und/oder einer zweiten Leistung derart einsetzbar sind, dass ein erster Bremsdruck (p1) in mindestens einem ersten Radbremszylinder eines ersten Bremskreises des Bremssystems entsprechend eines vorgegebenen ersten Soll-Bremsdrucks oder Soll-Bremsdruckverlaufs und ein zweiter Bremsdruck (p2) in mindestens einem zweiten Radbremszylinder eines zweiten Bremskreises des Bremssystems entsprechend eines vorgegebenen zweiten Soll-Bremsdrucks oder Soll-Bremsdruckverlaufs einstellbar sind;
**dadurch gekennzeichnet dass**,
die Elektronikeinrichtung (12) zusätzlich dazu ausgelegt ist, das Bremssystem zumindest noch in einen zweiten ausführbaren Betriebsmodus zu so betreiben, dass zumindest die angesteuerte erste hydraulische Komponente (SA, P, EV1, EV2, AV1, AV2, USV1, USV2, HSV1, HSV2) mit einer niedrigeren Häufigkeit als der ersten Häufigkeit und/oder einer niedrigeren Leistung als der ersten Leistung und die angesteuerte zweite hydraulische Komponente (SA, P, EV1, EV2, AV1, AV2, USV1, USV2, HSV1, HSV2) mit einer höheren Häufigkeit als der zweiten Häufigkeit und/oder einer höheren Leistung als der zweiten Leistung derart einsetzbar sind, dass der erste Bremsdruck (p1) entsprechend dem vorgegebenen ersten Soll-Bremsdruck oder Soll-Bremsdruckverlauf in dem mindestens einen ersten Radbremszylinder und der zweite Bremsdruck (p2) entsprechend dem vorgegebenen zweiten Soll-Bremsdruck oder Soll-Bremsdruckverlauf in dem mindestens einen zweiten Radbremszylinder einstellbar sind;
wobei die Elektronikeinrichtung (12) zusätzlich dazu ausgelegt ist, unter Berücksichtigung mindestens einer bereitgestellten Vorgabegröße (18) einen auszuführenden Betriebsmodus aus den mindestens zwei ausführbaren Betriebsmoden auszuwählen und das Bremssystem in dem ausgewählten Betriebsmodus so zu betreiben, dass der erste Bremsdruck (p1) in dem mindestens einen ersten Radbremszylinder und der zweite Bremsdruck (p2) in dem mindestens einen zweiten Radbremszylinder einstellbar sind.

2. Steuervorrichtung (10) nach Anspruch 1, wobei die Elektronikeinrichtung (12) dazu ausgelegt ist, einen Fahrzeugtyp des Fahrzeugs, eine Fahrsituation, eine Verkehrssituation und/oder eine Umgebungsbedingung als die mindestens eine bereitgestellte Vorgabegröße (18) zu berücksichtigen.

3. Steuervorrichtung (10) nach Anspruch 1 oder 2, wobei die Elektronikeinrichtung (12) dazu ausgelegt ist, mindestens einen Plunger (SA), mindestens eine Pumpe (P), mindestens ein Radeinlassventil (EV1, EV2), mindestens ein Radauslassventil (AV1, AV2), mindestens ein Hochdruckschaltventil (HSV1, HSV2) und/oder mindestens ein Umschaltventil (USV1, USV2) als die erste Komponente (SA, P, EV1, EV2, AV1, AV2, USV1, USV2, HSV1, HSV2) und/oder die zweite Komponente (SA, P, EV1, EV2, AV1, AV2, USV1, USV2, HSV1, HSV2) anzusteuern.

4. Steuervorrichtung (10) nach Anspruch 3, wobei die Elektronikeinrichtung (12) dazu ausgelegt ist, das Bremssystem in einen Radauslassventilnutzenden-Betriebsmodus ausgewählt aus den mindestens zwei ausführbaren Betriebsmoden so zu betreiben, dass ein Hauptbremszylinder-Innendruck (pHZ) in einem Hauptbremszylinder des Bremssystems gleich einem Maximum des ersten Bremsdrucks (p1) und des zweiten Bremsdrucks (p2) mittels des mindestens einen angesteuerten Plungers (SA) einstellbar ist, und der erste Bremsdruck (p1) oder der zweite Bremsdruck (p2) gegenüber dem Hauptbremszylinder-Innendruck (pHZ) zumindest mittels des mindestens einen angesteuerten Radauslassventils (AV1, AV2) reduzierbar ist.

5. Steuervorrichtung (10) nach Anspruch 3 oder 4, wobei die Elektronikeinrichtung (12) dazu ausgelegt ist, das Bremssystem in einen Pumpennutzenden-Betriebsmodus ausgewählt aus den mindestens zwei ausführbaren Betriebsmoden so zu betreiben, dass der Hauptbremszylinder-Innendruck (pHZ) gleich einem Minimum des ersten Bremsdrucks (p1) und des zweiten Bremsdrucks (p2) mittels des mindestens einen angesteuerten Plungers (SA) einstellbar ist, und der erste Bremsdruck (p1) oder der zweite Bremsdruck (p2) gegenüber dem Hauptbremszylinder-Innendruck (pHZ) zumindest mittels der mindestens einen angesteuerten Pumpe (P) steigerbar ist.

6. Steuervorrichtung (10) nach einem der Ansprüche 3 bis 5, wobei die Elektronikeinrichtung (12) dazu ausgelegt ist, das Bremssystem in einen Plungernutzenden-Betriebsmodus ausgewählt aus den mindestens zwei ausführbaren Betriebsmoden so zu betreiben, dass der erste Bremsdruck (p1) und der zweite Bremsdruck (p2) gleichzeitig steigerbar sind, indem der Hauptbremszylinder-Innendruck (pHZ) gleich dem Maximum des ersten Bremsdrucks (p1) und des zweiten Bremsdrucks (p2) mittels des mindestens einen angesteuerten Plungers (SA) einstellbar ist, und der erste Bremsdruck (p1) und der zweite Bremsdruck (p2) gleichzeitig reduzierbar sind, indem der Hauptbremszylinder-Innendruck (pHZ) gleich dem Minimum des ersten Bremsdrucks (p1) und des zweiten Bremsdrucks (p2) mittels des mindestens einen angesteuerten Plungers (SA) einstellbar ist.

7. Steuervorrichtung (10) nach einem der Ansprüche 3 bis 6, wobei die Elektronikeinrichtung (12) dazu ausgelegt ist, das Bremssystem in einen Plungereinsetzenden-Betriebsmodus ausgewählt aus den mindestens zwei ausführbaren Betriebsmoden so zu betreiben, dass der erste Bremsdruck (p1) und der zweite Bremsdruck (p2) gleichzeitig steigerbar sind, indem der Hauptbremszylinder-Innendruck (pHZ) größer dem Maximum des ersten Bremsdrucks (p1) und des zweiten Bremsdrucks (p2) mittels des mindestens einen angesteuerten Plungers (SA) einstellbar ist, und der erste Bremsdruck (p1) und der zweite Bremsdruck (p2) gleichzeitig reduzierbar sind, indem der Hauptbremszylinder-Innendruck (pHZ) kleiner dem Minimum des ersten Bremsdrucks (p1) und des zweiten Bremsdrucks (p2) mittels des mindestens einen angesteuerten Plungers (SA) einstellbar ist.

8. Bremssystem für ein Fahrzeug mit einer Steuervorrichtung (10) nach einem der vorhergehenden Ansprüche.

9. Verfahren zum Betreiben eines Bremssystems eines Fahrzeugs **gekennzeichnet durch** die Schritte:
Auswählen eines auszuführenden Betriebsmodus aus mindestens zwei ausführbaren Betriebsmoden des Bremssystems zum Variieren eines ersten Bremsdrucks (p1) in mindestens einem ersten Radbremszylinder eines ersten Bremskreises des Bremssystems entsprechend eines vorgegebenen ersten Soll-Bremsdrucks oder Soll-Bremsdruckverlaufs und eines zweiten Bremsdrucks (p2) in mindestens einem zweiten Radbremszylinder eines zweiten Bremskreises des Bremssystems entsprechend eines vorgegebenen zweiten Soll-Bremsdrucks oder Soll-Bremsdruckverlaufs unter Berücksichtigung mindestens einer bereitgestellten Vorgabegröße (18), wobei bei einem Betreiben des Bremssystems in einem ersten ausführbaren Betriebsmodus der mindestens zwei ausführbaren Betriebsmoden der erste Bremsdruck (p1) in dem mindestens einen ersten Radbremszylinder und der zweite Bremsdruck (p2) in dem mindestens einen zweiten Radbremszylinder eingestellt werden, indem zumindest eine erste hydraulische Komponente (SA, P, EV1, EV2, AV1, AV2, USV1, USV2, HSV1, HSV2) des Bremssystems mit einer ersten Häufigkeit und/oder einer ersten Leistung und eine zweite hydraulische Komponente (SA, P, EV1, EV2, AV1, AV2, USV1, USV2, HSV1, HSV2) des Bremssystems mit einer zweiten Häufigkeit und/oder einer zweiten Leistung eingesetzt werden, und bei einem Betreiben des Bremssystems in einem zweiten ausführbaren Betriebsmodus der mindestens zwei ausführbaren Betriebsmoden der erste Bremsdruck (p1) in dem mindestens einen ersten Radbremszylinder und der zweite Bremsdruck (p2) in dem mindestens einen zweiten Radbremszylinder eingestellt werden, indem zumindest die erste hydraulische Komponente (SA, P, EV1, EV2, AV1, AV2, USV1, USV2, HSV1, HSV2) mit einer niedrigeren Häufigkeit als der ersten Häufigkeit und/oder einer niedrigeren Leistung als der ersten Leistung und die zweite hydraulische Komponente (SA, P, EV1, EV2, AV1, AV2, USV1, USV2, HSV1, HSV2) mit einer höheren Häufigkeit als der zweiten Häufigkeit und/oder einer höheren Leistung als der zweiten Leistung eingesetzt werden; und
Betreiben des Bremssystems in dem ausgewählten Betriebsmodus so, dass der erste Bremsdruck (p1) in dem mindestens einen ersten Radbremszylinder und der zweite Bremsdruck (p2) in dem mindestens einen zweiten Radbremszylinder eingestellt werden.

10. Verfahren nach Anspruch 9, wobei ein Fahrzeugtyp des Fahrzeugs, eine Fahrsituation, eine Verkehrssituation und/oder eine Umgebungsbedingung als die mindestens eine bereitgestellte Vorgabegröße (18) berücksichtigt werden.

11. Verfahren nach Anspruch 9 oder 10, wobei mindesten ein Plunger (SA), mindestens eine Pumpe (P), mindestens ein Radeinlassventil (EV1, EV2), mindestens ein Radauslassventil (AV1, AV2), mindestens ein Hochdruckschaltventil (HSV1, HSV2) und/oder mindestens ein Umschaltventil (USV1, USV2) als die erste Komponente (SA, P, EV1, EV2, AV1, AV2, USV1, USV2, HSV1, HSV2) und/oder die zweite Komponente (SA, P, EV1, EV2, AV1, AV2, USV1, USV2, HSV1, HSV2) eingesetzt werden.

12. Verfahren nach Anspruch 11, wobei das Bremssystem in einen Radauslassventilnutzenden-Betriebsmodus ausgewählt aus den mindestens zwei ausführbaren Betriebsmoden so betrieben wird, dass ein Hauptbremszylinder-Innendruck (pHZ) in einem Hauptbremszylinder des Bremssystems gleich einem Maximum des ersten Bremsdrucks (p1) und des zweiten Bremsdrucks (p2) mittels des mindestens einen Plungers (SA) eingestellt wird, und der erste Bremsdruck (p1) oder der zweite Bremsdruck (p2) gegenüber dem Hauptbremszylinder-Innendruck (pHZ) zumindest mittels des mindestens einen Radauslassventils (AV1, AV2) reduziert wird.

13. Verfahren nach Anspruch 11 oder 12, wobei das Bremssystem in einen Pumpennutzenden-Betriebsmodus ausgewählt aus den mindestens zwei ausführbaren Betriebsmoden so betrieben wird, dass der Hauptbremszylinder-Innendruck (pHZ) gleich einem Minimum des ersten Bremsdrucks (p1) und des zweiten Bremsdrucks (p2) mittels des mindestens einen Plungers (SA) eingestellt wird, und der erste Bremsdruck (p1) oder der zweite Bremsdruck (p2) gegenüber dem Hauptbremszylinder-Innendruck (pHZ) zumindest mittels der mindestens einen Pumpe (P) gesteigert wird.

14. Verfahren nach einem der Ansprüche 11 bis 13, wobei das Bremssystem in einen Plungernutzenden-Betriebsmodus ausgewählt aus den mindestens zwei ausführbaren Betriebsmoden so betrieben wird, dass der erste Bremsdruck (p1) und der zweite Bremsdruck (p2) gleichzeitig gesteigert werden, indem der Hauptbremszylinder-Innendruck (pHZ) gleich dem Maximum des ersten Bremsdrucks (p1) und des zweiten Bremsdrucks (p2) mittels des mindestens einen Plungers (SA) eingestellt wird, und der erste Bremsdruck (p1) und der zweite Bremsdruck (p2) gleichzeitig reduziert werden, indem der Hauptbremszylinder-Innendruck (pHZ) gleich dem Minimum des ersten Bremsdrucks (p1) und des zweiten Bremsdrucks (p2) mittels des mindestens einen Plungers (SA) eingestellt wird.

15. Verfahren nach einem der Ansprüche 11 bis 14, wobei das Bremssystem in einen Plungereinsetzenden-Betriebsmodus ausgewählt aus den mindestens zwei ausführbaren Betriebsmoden so betrieben wird, dass der erste Bremsdruck (p1) und der zweite Bremsdruck (p2) gleichzeitig gesteigert werden, indem der Hauptbremszylinder-Innendruck (pHZ) größer dem Maximum des ersten Bremsdrucks (p1) und des zweiten Bremsdrucks (p2) mittels des mindestens einen Plungers (SA) eingestellt wird, und der erste Bremsdruck (p1) und der zweite Bremsdruck (p2) gleichzeitig reduziert werden, indem der Hauptbremszylinder-Innendruck (pHZ) kleiner dem Minimum des ersten Bremsdrucks (p1) und des zweiten Bremsdrucks (p2) mittels des mindestens einen Plungers (SA) eingestellt wird.

## Claims

1. Control device (10) for a brake system of a vehicle, comprising:
an electronic device (12) which is configured to actuate at least a first hydraulic component (SA, P, EV1, EV2, AV1, AV2, USV1, USV2, HSV1, HSV2) of the brake system and a second hydraulic component (SA, P, EV1, EV2, AV1, AV2, USV1, USV2, HSV1, HSV2) of the brake system in such a way that the brake system can be operated in at least a first executable operating mode in such a way that at least the actuated first hydraulic component (SA, P, EV1, EV2, AV1, AV2, USV1, USV2, HSV1, HSV2) can be used with a first frequency and/or a first power level, and the actuated second hydraulic component (SA, P, EV1, EV2, AV1, AV2, USV1, USV2, HSV1, HSV2) can be used with a second frequency and/or a second power level in such a way that a first brake pressure (p1) can be set in at least a first wheel brake cylinder of a first brake circuit of the brake system in accordance with a predefined first setpoint brake pressure or setpoint brake pressure profile, and a second brake pressure (p2) can be set in at least a second wheel brake cylinder of a second brake circuit of the brake system in accordance with a predefined second setpoint brake pressure or setpoint brake pressure profile;
**characterized in that**
the electronic device (12) is additionally configured to operate the brake system at least also in a second executable operating mode in such a way that at least the actuated first hydraulic component (SA, P, EV1, EV2, AV1, AV2, USV1, USV2, HSV1, HSV2) can be used with a lower frequency than the first frequency and/or a lower power level than the first power level, and the actuated second hydraulic component (SA, P, EV1, EV2, AV1, AV2, USV1, USV2, HSV1, HSV2) can be used with a higher frequency than the second frequency and/or a higher power level than the second power level in such a way that the first brake pressure (p1) can be set in accordance with the predefined first setpoint brake pressure or setpoint brake pressure profile in the at least one first wheel brake cylinder, and the second brake pressure (p2) can be set in accordance with the predefined second setpoint brake pressure or setpoint brake pressure profile in the at least one second wheel brake cylinder;
wherein the electronic device (12) is additionally configured to select, while taking into account at least one supplied predefined variable (18), an operating mode which is to be executed from the at least two executable operating modes, and to operate the brake system in the selected operating mode in such a way that the first brake pressure (p1) can be set in the at least one first wheel brake cylinder, and the second brake pressure (p2) can be set in the at least one second wheel brake cylinder.

2. Control device (10) according to Claim 1, wherein the electronic device (12) is configured to take into account a vehicle type of the vehicle, a driving situation, a traffic situation and/or a surrounding condition as the at least one supplied predefined variable (18).

3. Control device (10) according to Claim 1 or 2, wherein the electronic device (12) is configured to actuate at least one plunger (SA), at least one pump (P), at least one wheel inlet valve (EV1, EV2), at least one wheel outlet valve (AV1, AV2), at least one high-pressure switching valve (HSV1, HSV2) and/or at least one switch-over valve (USV1, USV2) as the first component (SA, P, EV1, EV2, AV1, AV2, USV1, USV2, HSV1, HSV2) and/or the second component (SA, P, EV1, EV2, AV1, AV2, USV1, USV2, HSV1, HSV2).

4. Control device (10) according to Claim 3, wherein the electronic device (12) is configured to operate the brake system in a wheel outlet valve-using operating mode selected from the at least two executable operating modes in such a way that a master brake cylinder internal pressure (pHZ) can be set in a master brake cylinder of the brake system to be equal to a maximum of the first brake pressure (p1) and of the second brake pressure (p2) by means of the at least one actuated plunger (SA), and the first brake pressure (p1) or the second brake pressure (p2) can be reduced with respect to the master brake cylinder internal pressure (pHZ) at least by means of the at least one actuated wheel outlet valve (AV1, AV2).

5. Control device (10) according to Claim 3 or 4, wherein the electronic device (12) is configured to operate the brake system in a pump-using operating mode selected from the at least two executable operating modes in such a way that the master brake cylinder internal pressure (pHZ) can be set to be equal to a minimum of the first brake pressure (p1) and of the second brake pressure (p2) by means of the at least one actuated plunger (SA), and the first brake pressure (p1) or the second brake pressure (p2) can be increased with respect to the master brake cylinder internal pressure (pHZ) at least by means of the at least one actuated pump (P).

6. Control device (10) according to one of Claims 3 to 5, wherein the electronic device (12) is configured to operate the brake system in a plunger-using operating mode selected from the at least two executable operating modes in such a way that the first brake pressure (p1) and the second brake pressure (p2) can be increased simultaneously, in that the master brake cylinder internal pressure (pHZ) can be set to be equal to the maximum of the first brake pressure (p1) and of the second brake pressure (p2) by means of the at least one actuated plunger (SA), and the first brake pressure (p1) and the second brake pressure (p2) can be reduced simultaneously, in that the master brake cylinder internal pressure (pHZ) can be set to be equal to the minimum of the first brake pressure (p1) and of the second brake pressure (p2) by means of the at least one actuated plunger (SA).

7. Control device (10) according to one of Claims 3 to 6, wherein the electronic device (12) is configured to operate the brake system in a plunger-using operating mode selected from the at least two executable operating modes in such a way that the first brake pressure (p1) and the second brake pressure (p2) can be increased simultaneously, in that the master brake cylinder internal pressure (pHZ) can be set to be higher than the maximum of the first brake pressure (p1) and of the second brake pressure (p2) by means of the at least one actuated plunger (SA), and the first brake pressure (p1) and the second brake pressure (p2) can be reduced simultaneously, in that the master brake cylinder internal pressure (pHZ) can be set to be lower than the minimum of the first brake pressure (p1) and of the second brake pressure (p2) by means of the at least one actuated plunger (SA).

8. Brake system for a vehicle having a control device (10) according to one of the preceding claims.

9. Method for operating a brake system of a vehicle **characterized by** the steps:
selecting an operating mode to be executed from at least two executable operating modes of the brake system in order to vary a first brake pressure (p1) in at least one first wheel brake cylinder of a first brake circuit of the brake system in accordance with a predefined first setpoint brake pressure or setpoint brake pressure profile and a second brake pressure (p2) in at least one second wheel brake cylinder of a second brake circuit of the brake system in accordance with a predefined second setpoint brake pressure or setpoint brake pressure profile while taking into account at least one supplied predefined variable (18), wherein when the brake system is operated in a first executable operating mode of the at least two executable operating modes, the first brake pressure (p1) is set in the at least one first wheel brake cylinder, and the second brake pressure (p2) is set in the at least one second wheel brake cylinder, in that at least one first hydraulic component (SA, P, EV1, EV2, AV1, AV2, USV1, USV2, HSV1, HSV2) of the brake system is used with a first frequency and/or a first power level, and a second hydraulic component (SA, P, EV1, EV2, AV1, AV2, USV1, USV2, HSV1, HSV2) of the brake system is used with a second frequency and/or a second power level, and when the brake system is operated in a second executable operating mode of the at least two executable operating modes, the first brake pressure (p1) is set in the at least one first wheel brake cylinder, and the second brake pressure (p2) is set in the at least one second wheel brake cylinder, in that at least the first hydraulic component (SA, P, EV1, EV2, AV1, AV2, USV1, USV2, HSV1, HSV2) is used with a lower frequency than the first frequency and/or a lower power level than the first power level, and the second hydraulic component (SA, P, EV1, EV2, AV1, AV2, USV1, USV2, HSV1, HSV2) is used with a higher frequency than the second frequency and/or a higher power level than the second power level; and
operating the brake system in the selected operating mode in such a way that the first brake pressure (p1) is set in the at least one first wheel brake cylinder, and the second brake pressure (p2) is set in the at least one second wheel brake cylinder.

10. Method according to Claim 9, wherein a vehicle type of the vehicle, a driving situation, a traffic situation and/or a surrounding condition are taken into account as the at least one supplied predefined variable (18).

11. Method according to Claim 9 or 10, wherein at least one plunger (SA), at least one pump (P), at least one wheel inlet valve (EV1, EV2), at least one wheel outlet valve (AV1, AV2), at least one high-pressure switching valve (HSV1, HSV2) and/or at least one switch-over valve (USV1, USV2) are/is used as the first component (SA, P, EV1, EV2, AV1, AV2, USV1, USV2, HSV1, HSV2) and/or the second component (SA, P, EV1, EV2, AV1, AV2, USV1, USV2, HSV1, HSV2).

12. Method according to Claim 11, wherein the brake system is operated in a wheel outlet valve-using operating mode selected from the at least two executable operating modes in such a way that a master brake cylinder internal pressure (pHZ) is set in a master brake cylinder of the brake system to be equal to a maximum of the first brake pressure (p1) and of the second brake pressure (p2) by means of the at least one plunger (SA), and the first brake pressure (p1) or the second brake pressure (p2) is reduced with respect to the master brake cylinder internal pressure (pHZ) at least by means of the at least one wheel outlet valve (AV1, AV2).

13. Method according to Claim 11 or 12, wherein the brake system is operated in a pump-using operating mode selected from the at least two executable operating modes in such a way that the master brake cylinder internal pressure (pHZ) is set to be equal to a minimum of the first brake pressure (p1) and of the second brake pressure (p2) by means of the at least one plunger (SA), and the first brake pressure (p1) or the second brake pressure (p2) is increased with respect to the master brake cylinder internal pressure (pHZ) at least by means of the at least one pump (P).

14. Method according to one of Claims 11 to 13, wherein the brake system is operated in a plunger-using operating mode selected from the at least two executable operating modes in such a way that the first brake pressure (p1) and the second brake pressure (p2) are increased simultaneously, in that the master brake cylinder internal pressure (pHZ) is set to be equal to the maximum of the first brake pressure (p1) and of the second brake pressure (p2) by means of the at least one plunger (SA), and the first brake pressure (p1) and the second brake pressure (p2) are reduced simultaneously, in that the master brake cylinder internal pressure (pHZ) is set to be equal to the minimum of the first brake pressure (p1) and of the second brake pressure (p2) by means of the at least one plunger (SA).

15. Method according to one of Claims 11 to 14, wherein the brake system is operated in a plunger-using operating mode selected from the at least two executable operating modes in such a way that the first brake pressure (p1) and the second brake pressure (p2) are increased simultaneously, in that the master brake cylinder internal pressure (pHZ) is set to be higher than the maximum of the first brake pressure (p1) and of the second brake pressure (p2) by means of the at least one plunger (SA), and the first brake pressure (p1) and the second brake pressure (p2) are reduced simultaneously, in that the master brake cylinder internal pressure (pHZ) is set to be lower than the minimum of the first brake pressure (p1) and of the second brake pressure (p2) by means of the at least one plunger (SA).

## Revendications

1. Ensemble de commande (10) pour le système de freinage d'un véhicule, l'ensemble présentant :
un dispositif électronique (12) conçu pour commander un premier composant hydraulique (SA, P, EV1, EV2, AV1, AV2, USV1, USV2, HSV1, HSV2) du système de freinage et un deuxième composant hydraulique (SA, P, EV1, EV2, AV1, AV2, USV1, USV2, HSV1, HSV2) du système de freinage de telle sorte que
le système de freinage puisse être utilisé dans au moins un premier mode de fonctionnement exécutable, qu'au moins le premier composant hydraulique asservi (SA, P, EV1, EV2, AV1, AV2, USV1, USV2, HSV1, HSV2) puisse être utilisé à une première fréquence et/ou à une première puissance,
que le deuxième composant hydraulique asservi (SA, P, EV1, EV2, AV1, AV2, USV1, USV2, HSV1, HSV2) puisse être utilisé à une deuxième fréquence et/ou une deuxième puissance,
qu'une première pression de freinage (p1) puisse être établie dans au moins un premier cylindre de frein de roue d'un premier circuit de freinage du circuit de freinage en correspondance à une première pression prédéterminée de consigne de freinage ou à une évolution prédéterminée de pression de consigne de freinage,
qu'une deuxième pression de freinage (p2) puisse être établie dans au moins un deuxième cylindre de frein de roue d'un deuxième circuit de freinage du système de freinage en correspondance à une deuxième pression de freinage de consigne prédéterminée ou à une deuxième évolution de pression de freinage de consigne prédéterminée,
**caractérisé en ce que**
le dispositif électronique (12) est de plus conçu pour faire encore fonctionner le système de freinage en au moins un deuxième mode de fonctionnement exécutable de telle sorte que
au moins le premier composant hydraulique asservi (SA, P, EV1, EV2, AV1, AV2, USV1, USV2, HSV1, HSV2) puisse être utilisé à une fréquence plus basse que la première fréquence et/ou à une puissance plus basse que la première puissance,
que le deuxième composant hydraulique asservi (SA, P, EV1, EV2, AV1, AV2, USV1, USV2, HSV1, HSV2) puisse être utilisé à une fréquence plus élevée que la deuxième fréquence et/ou à une puissance plus élevée que la deuxième puissance,
que la première pression de freinage (p1) puisse être établie en correspondance à la première pression de freinage de consigne prédéterminée ou à la première évolution de pression de freinage de consigne prédéterminée dans le ou les premiers cylindres de frein de roue et
que la deuxième pression de freinage (p2) puisse être établie dans le ou les deuxièmes cylindres de frein de roue en correspondance à la deuxième pression de freinage de consigne prédéterminée ou à la deuxième évolution de pression de freinage de consigne prédéterminée,
l'unité électronique (12) étant en outre configurée de manière à sélectionner le mode de fonctionnement à exécuter parmi les deux ou plusieurs modes de fonctionnement exécutables en tenant compte d'au moins une grandeur de commande (18) qui lui est délivrée et à faire fonctionner le système de freinage dans le mode de fonctionnement sélectionné de telle sorte que la première pression de freinage (p1) puisse être établie dans le ou les premiers cylindres de frein de roue et que la deuxième pression de freinage (p2) puisse être établie dans le ou les deuxième cylindres de frein de roue.

2. Ensemble de commande (10) selon la revendication 1, dans lequel le dispositif électronique (12) est conçu pour tenir compte du type du véhicule, de la situation de conduite, de la situation du trafic et/ou des conditions ambiantes en tant que grandeur ou grandeurs de commande (18) qui lui sont délivrées.

3. Ensemble de commande (10) selon les revendications 1 ou 2, dans lequel le dispositif électronique (12) est conçu pour commander comme premier composant (SA, P, EV1, EV2, AV1, AV2, USV1, USV2, HSV1, HSV2) et/ou comme deuxième composant (SA, P, EV1, EV2, AV1, AV2, USV1, USV2, HSV1, HSV2) au moins un plongeur (SA), au moins une pompe (P), au moins une soupape d'admission (EV1, EV2) d'une roue, au moins une soupape de sortie (AV1, AV2) de roue, au moins une soupape (HSV1, HSV2) de commutation haute pression et/ou au moins une soupape de commutation (USV1, USV2).

4. Ensemble de commande (10) selon la revendication 3, dans lequel le dispositif électronique (12) est conçu pour faire fonctionner le système de freinage dans un mode de fonctionnement qui utilise les soupapes de sortie de roue sélectionné parmi les deux ou plusieurs modes de fonctionnement exécutables, de telle sorte qu'une pression intérieure (pHZ) d'un cylindre principal de frein du système de freinage égale au maximum de la première pression de freinage (p1) et de la deuxième pression de freinage (p2) puisse être établie au moyen du ou des plongeurs asservis (SA) et que la première pression de freinage (p1) ou la deuxième pression de freinage (p2) puissent être réduites par rapport à la pression intérieure (pHZ) du cylindre principal de frein au moins au moyen d'une soupape asservie (AV1, AV2) de sortie de roue.

5. Ensemble de commande (10) selon les revendications 3 ou 4, dans lequel le dispositif électronique (12) est conçu pour faire fonctionner le système de freinage dans un mode de fonctionnement qui utilise la pompe sélectionné parmi les deux ou plusieurs modes de fonctionnement exécutables, de telle sorte qu'une pression intérieure (pHZ) d'un cylindre principal de frein du système de freinage égale au minimum de la première pression de freinage (p1) et de la deuxième pression de freinage (p2) puisse être établie au moyen du ou des plongeurs asservis (SA) et que la première pression de freinage (p1) ou la deuxième pression de freinage (p2) puissent être augmentées par rapport à la pression intérieure (pHZ) du cylindre principal de frein au moins au moyen de la ou des pompes asservies (P).

6. Ensemble de commande (10) selon l'une des revendications 3 à 5, dans lequel le dispositif électronique (12) est conçu pour faire fonctionner le système de freinage dans un mode de fonctionnement qui utilise le plongeur sélectionné parmi les deux ou plusieurs modes de fonctionnement exécutables, de telle sorte que la première pression de freinage (p1) et la deuxième pression de freinage (p2) puissent être augmentées simultanément en réglant la pression intérieure (pHZ) d'un cylindre principal de frein du système de freinage au maximum de la première pression de freinage (p1) et de la deuxième pression de freinage (p2) au moyen du ou des plongeurs asservis (SA) et que la première pression de freinage (p1) et la deuxième pression de freinage (p2) puissent être réduites simultanément en réglant la pression intérieure (pHZ) d'un cylindre principal de frein du système de freinage au minimum de la première pression de freinage (p1) et de la deuxième pression de freinage (p2) au moyen du ou des plongeurs asservis (SA).

7. Ensemble de commande (10) selon l'une des revendications 3 à 6, dans lequel le dispositif électronique (12) est conçu pour faire fonctionner le système de freinage dans un mode de fonctionnement qui utilise le plongeur sélectionné parmi les deux ou plusieurs modes de fonctionnement exécutables, de telle sorte que la première pression de freinage (p1) et la deuxième pression de freinage (p2) puissent être augmentées simultanément en réglant la pression intérieure (pHZ) d'un cylindre principal de frein du système de freinage à une valeur supérieure au maximum de la première pression de freinage (p1) et de la deuxième pression de freinage (p2) au moyen du ou des plongeurs asservis (SA) et que la première pression de freinage (p1) et la deuxième pression de freinage (p2) puissent être réduites simultanément en réglant la pression intérieure (pHZ) d'un cylindre principal de frein du système de freinage à une valeur inférieure au minimum de la première pression de freinage (p1) et de la deuxième pression de freinage (p2) au moyen du ou des plongeurs asservis (SA) et que la première pression de freinage (p1) et la deuxième pression de freinage (p2) puissent être réduites simultanément en réglant la pression intérieure (pHZ) du cylindre principal de freinage à une valeur inférieure au minimum de la première pression de freinage (p1) et de la deuxième pression de freinage (p2) au moyen du ou des plongeurs asservis (SA).

8. Système de freinage pour véhicule, présentant un ensemble de commande (10) selon l'une des revendications précédentes.

9. Procédé d'utilisation d'un système de freinage de véhicule, **caractérisé par** les étapes suivantes :
sélection du mode de fonctionnement à exécuter parmi au moins deux modes de fonctionnement exécutables du système de freinage, en vue de faire varier une première pression de freinage (p1) dans au moins un premier cylindre de frein de roue d'un premier circuit de freinage du système de freinage en correspondance à une première pression prédéterminée de freinage de consigne ou à une première évolution prédéterminée de la pression de freinage de consigne et de faire varier une deuxième pression de freinage (p2) dans au moins un deuxième cylindre de frein de roue d'un deuxième circuit de freinage du système de freinage en correspondance à une deuxième pression de freinage de consigne prédéterminée ou à une deuxième évolution prédéterminée de la pression de freinage de consigne en tenant compte d'au moins une grandeur de commande (18) qui leur sont délivrées,
tandis que lorsque le système de freinage est utilisé dans au moins un premier mode de fonctionnement exécutable sélectionné parmi les deux ou plusieurs modes de fonctionnement exécutables, la première pression de freinage (p1) est établie dans le ou les premiers cylindres de frein de roue et la deuxième pression de freinage (p2) est établie dans le ou les deuxième cylindres de frein de roue en utilisant au moins le premier composant hydraulique asservi (SA, P, EV1, EV2, AV1, AV2, USV1, USV2, HSV1, HSV2) du système de freinage à une première fréquence et/ou à une première puissance et en utilisant un deuxième composant hydraulique asservi (SA, P, EV1, EV2, AV1, AV2, USV1, USV2, HSV1, HSV2) du système de freinage à une deuxième fréquence et/ou à une deuxième puissance, et que lorsque le système de freinage est utilisé dans un deuxième mode de fonctionnement exécutable sélectionné parmi les deux ou plusieurs modes de fonctionnement exécutables, la première pression de freinage (p1) est établie dans le ou les premiers cylindres de frein de roue et la deuxième pression de freinage (p2) est établie dans le ou les deuxièmes cylindres de frein de roue en utilisant en utilisant au moins le premier composant hydraulique asservi (SA, P, EV1, EV2, AV1, AV2, USV1, USV2, HSV1, HSV2) à une fréquence plus basse que la première fréquence et/ou à une puissance plus basse que la première puissance et en utilisant le deuxième composant hydraulique asservi (SA, P, EV1, EV2, AV1, AV2, USV1, USV2, HSV1, HSV2) à une fréquence plus élevée que la deuxième fréquence et/ou à une puissance plus élevée que la deuxième puissance, et
utilisation du système de freinage dans le mode de fonctionnement sélectionné de telle sorte que la première pression de freinage (p1) soit établie dans le ou les premiers cylindres de frein de roue et que la deuxième pression de freinage (p2) soit établie dans le ou les deuxièmes cylindres de frein de roue.

10. Procédé selon la revendication 9, dans lequel le type du véhicule, la situation de conduite, la situation du trafic et/ou les conditions ambiantes sont prises en compte en tant que grandeur ou grandeurs de commande (18).

11. Procédé selon les revendications 9 ou 10, dans comme premier composant (SA, P, EV1, EV2, AV1, AV2, USV1, USV2, HSV1, HSV2) et/ou comme deuxième composant (SA, P, EV1, EV2, AV1, AV2, USV1, USV2, HSV1, HSV2), au moins un plongeur (SA), au moins une pompe (P), au moins une soupape d'admission (EV1, EV2) d'une roue, au moins une soupape de sortie (AV1, AV2) de roue, au moins une soupape (HSV1, HSV2) de commutation haute pression et/ou au moins une soupape de commutation (USV1, USV2) sont utilisés.

12. Procédé selon la revendication 11, dans lequel dans un mode de fonctionnement qui utilise les soupapes de sortie de roue, sélectionné parmi les deux ou plusieurs modes de fonctionnement exécutables, le système de freinage est utilisé de telle sorte qu'une pression intérieure (pHZ) d'un cylindre principal de frein du système de freinage égale au maximum de la première pression de freinage (p1) et de la deuxième pression de freinage (p2) est établie au moyen du ou des plongeurs asservis (SA) et que la première pression de freinage (p1) ou la deuxième pression de freinage (p2) sont réduites par rapport à la pression intérieure (pHZ) du cylindre principal de frein au moins au moyen d'une soupape asservie (AV1, AV2) de sortie de roue.

13. Procédé selon les revendications 11 ou 12, dans lequel dans un mode de fonctionnement qui utilise la pompe sélectionné parmi les deux ou plusieurs modes de fonctionnement exécutables, le système de freinage est utilisé en réglant la pression intérieure (pHZ) du cylindre principal de frein au minimum de la première pression de freinage (p1) et de la deuxième pression de freinage (p2) au moyen du ou des plongeurs asservis (SA) et en augmentant la première pression de freinage (p1) ou la deuxième pression de freinage (p2) puissent être augmentées par rapport à la pression intérieure (pHZ) du cylindre principal de frein au moins au moyen de la ou des pompes (P).

14. Procédé selon l'une des revendications 11 à 13, dans lequel dans un mode de fonctionnement qui utilise le plongeur sélectionné parmi les deux ou plusieurs modes de fonctionnement exécutables, le système de freinage est utilisé de telle sorte que la première pression de freinage (p1) et la deuxième pression de freinage (p2) soient augmentées simultanément en réglant la pression intérieure (pHZ) d'un cylindre principal de frein du système de freinage au maximum de la première pression de freinage (p1) et de la deuxième pression de freinage (p2) au moyen du ou des plongeurs asservis (SA) et que la première pression de freinage (p1) et la deuxième pression de freinage (p2) soient réduites simultanément en réglant la pression intérieure (pHZ) d'un cylindre principal de frein du système de freinage au minimum de la première pression de freinage (p1) et de la deuxième pression de freinage (p2) au moyen du ou des plongeurs asservis (SA).

15. Procédé selon l'une des revendications 11 à 14, dans lequel dans un mode de fonctionnement qui utilise le plongeur sélectionné parmi les deux ou plusieurs modes de fonctionnement exécutables, le système de freinage est utilisé de telle sorte que la première pression de freinage (p1) et la deuxième pression de freinage (p2) soient augmentées simultanément en réglant la pression intérieure (pHZ) d'un cylindre principal de frein du système de freinage à une valeur supérieure au maximum de la première pression de freinage (p1) et de la deuxième pression de freinage (p2) au moyen du ou des plongeurs asservis (SA) et que la première pression de freinage (p1) et la deuxième pression de freinage (p2) soient réduites simultanément en réglant la pression intérieure (pHZ) d'un cylindre principal de frein du système de freinage à une valeur inférieure au minimum de la première pression de freinage (p1) et de la deuxième pression de freinage (p2) au moyen du ou des plongeurs asservis (SA) et que la première pression de freinage (p1) et la deuxième pression de freinage (p2) puissent être réduites simultanément en réglant la pression intérieure (pHZ) du cylindre principal de freinage à une valeur inférieure au minimum de la première pression de freinage (p1) et de la deuxième pression de freinage (p2) au moyen du ou des plongeurs asservis (SA).
